(19) Europäisches Patentamt

European Patent Office

Office européen des brevets

(11) **EP 2 279 487 B1**

(12) **FASCICULE DE BREVET EUROPEEN**

(45) Date de publication et mention
de la délivrance du brevet:
**01.05.2013 Bulletin 2013/18**

(21) Numéro de dépôt: **09729251.0**

(22) Date de dépôt: **25.03.2009**

(51) Int Cl.:
*G06T 7/00* $^{(2006.01)}$    *G02B 21/22* $^{(2006.01)}$
*G01N 15/14* $^{(2006.01)}$    *G01B 11/00* $^{(2006.01)}$

(86) Numéro de dépôt international:
**PCT/FR2009/050513**

(87) Numéro de publication internationale:
**WO 2009/125132 (15.10.2009 Gazette 2009/42)**

(54) **PROCEDE DE DETERMINATION D'UNE REPRESENTATION TRIDIMENSIONNELLE D'UN OBJET A PARTIR D'UNE SEQUENCE D'IMAGES EN COUPE, PRODUIT PROGRAMME D'ORDINATEUR, PROCEDE D'ANALYSE D'UN OBJET ET SYSTEME D'IMAGERIE CORRESPONDANTS**

VERFAHREN ZUR BESTIMMUNG EINER DREIDIMENSIONALEN DARSTELLUNG EINES OBJEKTS UNTER VERWENDUNG EINER SEQUENZ VON QUERSCHNITTBILDERN, COMPUTERPROGRAMMPRODUKT UND ENTSPRECHENDES VERFAHREN ZUM ANALYSIEREN EINES OBJEKTS UND ABBILDUNGSSYSTEM

METHOD FOR DETERMINING A THREE-DIMENSIONAL REPRESENTATION OF AN OBJECT USING A SEQUENCE OF CROSS-SECTION IMAGES, COMPUTER PROGRAM PRODUCT, AND CORRESPONDING METHOD FOR ANALYZING AN OBJECT AND IMAGING SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.03.2008 FR 0851984**

(43) Date de publication de la demande:
**02.02.2011 Bulletin 2011/05**

(73) Titulaire: **Université Paris 13**
**93430 Villetaneuse (FR)**

(72) Inventeur: **WANG, Jiaping**
**F-92160 Antony (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A- 1 413 911**

- **YONG YU ET AL: "A Bayesian 3D Volume Reconstruction for Confocal Micro-rotation Cell Imaging" MEDICAL IMAGE COMPUTING AND COMPUTER-ASSISTED INTERVENTION Â MICCAI 2007; [LECTURE NOTES IN COMPUTER SCIENCE], SPRINGER BERLIN HEIDELBERG, BERLIN, HEIDELBERG, vol. 4792, 29 octobre 2007 (2007-10-29), pages 685-692, XP019081865 ISBN: 978-3-540-75758-0**

**Description**

La présente invention concerne un procédé de détermination d'une représentation tridimensionnelle d'un objet.

L'invention s'applique en particulier pour la reconstruction de micro objets dans les systèmes d'imagerie microscopique.

Le document de l'état de la technique EP 1 413 911 A1 décrit un procédé de détermination d'une représentation tridimensionnelle d'un objet à partir d'une séquence d'images en coupe de l'objet dans un plan de coupe, chaque image en coupe ayant été prise à un instant de prise de vue respectif, du type comprenant :

- pour chaque image en coupe, la détermination de la position de l'objet par rapport au plan de coupe à l'instant de prise de l'image en coupe,
- la détermination d'une représentation tridimensionnelle de l'objet à partir des images en coupe et des positions de l'objet par rapport au plan de coupe à chaque instant de prise de vue.

Dans ce document de l'état de la technique, l'objet est une cellule de dimension de l'ordre de quelques micromètres. La cellule est marquée avec un composé fluorescent et est placée dans un réceptacle d'un système d'imagerie microscopique. Un champ d'enfermement est créé dans le réceptacle afin de contrôler la position de la cellule, sans que cette dernière ne soit écrasée. Le système d'imagerie microscopique comprend en outre un microscope optique ayant un plan focal formant le plan de coupe. Afin d'obtenir la séquence d'images en coupe, la cellule est mise en rotation à une vitesse angulaire constante autour d'un axe du plan focal, et des images en coupe sont prises à une vitesse entre 1 et 1000 acquisitions par seconde.

Le document de l'état de la technique propose en outre de déterminer la représentation tridimensionnelle de la cellule à partir des techniques de reconstruction usuelles utilisées en tomographie. Ces techniques usuelles consistent à déterminer la représentation tridimensionnelle d'un objet à partir d'images en coupe et des positions de l'objet par rapport au plan de coupe, les positions de l'objet par rapport au plan de coupe étant déterminées par la connaissance des réglages de la machine de radiographie et/ou de capteurs physiques permettant de connaître la position de la machine de radiographie.

On connaît ainsi du document « A Bayesian 3D volume reconstruction for confocal micro-rotation cell imaging » (Yu Y. et al., Medical image computing and computer-assisted intervention - MICCAI 2007) un procédé de détermination d'une représentation tridimensionnelle d'un objet.

L'inventeur auteur de la présente invention s'est rendu compte que les techniques de reconstructions de radiographie donnaient des résultats médiocres, lorsque appliquées au système d'imagerie microscopique précédent.

L'invention a pour but de fournir un procédé de reconstruction adapté à un système d'imagerie microscopique.

Ainsi, l'invention a pour objet un procédé du type précité, caractérisé en ce que les positions de l'objet par rapport au plan de coupe sont déterminées en utilisant les images en coupe.

Selon d'autres caractéristiques de l'invention :

- l'objet ayant un mouvement par rapport au plan de coupe composé, d'une part, d'un mouvement régulier défini par des paramètres de mouvement régulier et, d'autre part, d'une suite de déplacements de perturbations de l'objet entre l'instant de prise d'une image en coupe et l'instant de prise de la suivante, les déplacements de perturbations étant des translations de perturbation, de direction et de valeur variables, la détermination des positions de l'objet par rapport au plan de coupe comprend la détermination de la suite de déplacements de perturbation en utilisant les images en coupe,
- le mouvement régulier étant un mouvement de rotation définit par les paramètres de mouvement suivants : un axe de rotation fixe et une vitesse angulaire constante, la détermination des positions de l'objet par rapport au plan de coupe comprend la détermination d'au moins une partie des paramètres de mouvement régulier en utilisant les images en coupe,
- la détermination des positions de l'objet par rapport au plan de coupe comprend la détermination de la vitesse angulaire en valeur absolue à partir de la détermination d'une période de révolution telle que deux images en coupe prises à des instants respectifs séparés l'un de l'autre d'un temps sensiblement égale à un multiple, non nul, de la période, soient sensiblement similaires,
- la détermination de la période comprend la détermination d'un groupe initial de périodes candidates ; la sélection, parmi les périodes candidates, pour chaque image en coupe, d'un premier sous-ensemble regroupant les périodes candidates ayant les niveaux de similitude périodique les plus élevés, le niveau de similitude périodique caractérisant, pour chaque période candidate, le niveau de similitude de l'image en coupe avec des images en coupe sensiblement périodiques, pour la période candidate ; la détermination d'une loi de probabilité qu'une période candidate soit sélectionnée, la loi de probabilité ayant la période comme paramètre ; la sélection de la période parmi les périodes candidates du groupe initial, comme étant celle maximisant la vraisemblance selon la loi de probabilité, connaissant les périodes candidates sélectionnées,

- la détermination des positions de l'objet par rapport au plan de coupe comprend, la vitesse angulaire en valeur absolue étant connue, pour chaque image en coupe, la détermination d'image en coupe spatialement voisines de l'image en coupe ; pour chaque image en coupe, le calcul d'une projection orthogonale de l'image en coupe sur un plan support de chaque image en coupe spatialement voisine, la projection orthogonale étant exprimée en fonction d'une valeur d'axe de rotation et d'une valeur de suite de translations de perturbation ; la comparaison de la valeur de chacun d'un ensemble de pixels de la projection orthogonale avec la valeur de ce pixel de l'image en coupe spatialement voisine sur laquelle la projection a été réalisée ; la détermination de l'axe de rotation et de la suite de translations de perturbation dont les valeurs donnent des valeurs de pixels proches au cours de la comparaison,

- la projection orthogonale de l'image en coupe est réalisée par le calcul d'une transformation affine de l'image en coupe, la transformation affine ayant une composante de transformation linéaire et une composante de translation fonctions de, respectivement, d'une part, la direction de la valeur d'axe de rotation et la vitesse de rotation et, d'autre part, la valeur d'axe de rotation, la vitesse de rotation et la valeur de suite de translations de perturbation,

- la détermination des positions de l'objet par rapport au plan de coupe comprend, la vitesse angulaire en valeur absolue étant connue ; pour chaque image en coupe, la détermination d'images en coupe spatialement voisines de l'image en coupe ; pour chaque image en coupe, le calcul d'une projection orthogonale de l'image en coupe sur un plan support de chaque image en coupe spatialement voisine, la projection orthogonale étant exprimée en fonction d'une valeur d'axe de rotation et d'une valeur de suite de translations de perturbation, la projection orthogonale étant réalisée par le calcul d'une transformation affine de l'image en coupe, la transformation affine ayant une composante de transformation linéaire et une composante de translation, la composante de transformation linéaire étant fonction la direction de la valeur d'axe de rotation et la vitesse de rotation ; la comparaison de la valeur de chacun d'un ensemble de pixels de la projection orthogonale avec la valeur de ce pixel de l'image en coupe spatialement voisine sur laquelle la projection a été réalisée ; la détermination de la direction de l'axe de rotation et des composantes de translation, dites de référence, dont les valeurs donnent des valeurs de pixels proches au cours de la comparaison,

- la détermination d'une estimation de la position de l'objet par rapport au plan de coupe comprend, la direction de l'axe de rotation et les composantes de translation de référence ayant été déterminées : l'expression de composantes de translation de transformation affine en fonction d'une valeur de suite de translations de perturbation et d'une valeur de point de passage de l'axe de rotation ; la détermination de la suite de translations de perturbation et d'un point de passage de l'axe de rotation dont les valeurs donnent des composantes de translation proches des composantes de translation de référence,

- la détermination des positions de l'objet par rapport au plan de coupe comprend la détermination de la direction de l'axe de rotation, et la détermination de la direction de l'axe de rotation comprend la détermination d'une projection de l'axe de rotation sur le plan de coupe, à partir des images en coupe,

- chaque image en coupe comprenant une grille de pixels, identique pour toutes les images en coupe, le procédé comprend : pour chaque pixel de la grille, la détermination de l'histogramme des valeurs que prend ce pixel dans au moins une partie de la séquence d'images en coupe et de l'histogramme des valeurs que prend le point symétrique au pixel par rapport à une valeur de projection de l'axe de rotation ; la détermination de la projection de l'axe de rotation dont la valeur donne des histogrammes proches entre chaque pixel et son point symétrique,

- le procédé comprend : la détermination, pour au moins un pixel de la grille, d'un temps de symétrisation, nécessaire à un point de l'objet pour se déplacer depuis ce pixel jusqu'au point symétrique par rapport à la projection de l'axe de rotation ; la détermination d'un angle entre l'axe de rotation et sa projection sur le plan de coupe, à partir du ou des temps de symétrisation,

- la détermination des positions de l'objet par rapport au plan de coupe comprend, la vitesse angulaire et l'axe de rotation étant connus : pour chaque image en coupe, la détermination d'image en coupe spatialement voisines de l'image en coupe ; pour chaque image en coupe, le calcul d'une projection orthogonale de l'image en coupe sur un plan support de chaque image en coupe spatialement voisines, la projection orthogonale étant exprimée en fonction d'un valeur d'axe de rotation et d'une valeur de suite de translations de perturbation, la projection orthogonale étant réalisée par le calcul d'une transformation affine de l'image en coupe, la transformation affine ayant une composante de transformation linéaire et une composante de translation, la composante de transformation linéaire étant fonction de la direction de la valeur d'axe de rotation et la vitesse angulaire de rotation ; la comparaison de la valeur de chacun d'un ensemble de pixels de la projection orthogonale avec la valeur de ce pixel de l'image en coupe spatialement voisine sur laquelle la projection a été réalisée ; la détermination, l'axe de rotation étant connu, des composantes de translation, dites de référence, dont les valeurs donnent des valeurs de pixels proches au cours de la comparaison ; l'expression de composantes de translation de transformation affine en fonction d'une valeur de suite de translations de perturbation et d'une valeur de point de passage de l'axe de rotation ; la détermination de la suite de translations de perturbation et d'un point de passage de l'axe de rotation dont les valeurs donnent des composantes de translation proches des composantes de translations de référence,

L'invention a également pour objet un produit programme d'ordinateur qui, lorsque mis en oeuvre sur un ordinateur informatique, réalise un procédé selon l'invention.

L'invention a également pour objet un procédé d'analyse d'un objet pour en déterminer une représentation tridimensionnelle, comprenant : l'introduction de l'objet dans un système d'imagerie définissant un plan focal formant un plan de coupe ; la configuration du système d'imagerie pour faire tourner l'objet autour d'un axe de rotation fixe et avec une vitesse angulaire fixe ; la prise d'une séquence d'images en coupe de l'objet ; la détermination d'une représentation tridimensionnelle de l'objet à partir de la séquence d'images en coupe, en utilisant un procédé selon l'invention.

Selon d'autre caractéristiques de l'invention :

- le procédé comprend : la prise d'une séquence d'images en coupe de l'objet, dites images en coupe de réglage ; la détermination de l'axe de rotation de l'objet, à partir des images en coupe de réglage,
- le précédé comprend le réglage du système d'imagerie pour déplacer le plan de coupe par rapport à l'objet de manière que le plan de coupe passe par un milieu de l'objet,
- le réglage du système d'imagerie comprend la détermination d'un barycentre de l'objet, et le milieu de l'objet est la projection du barycentre sur l'axe de rotation.

L'invention a également pour objet un système d'imagerie caractérisé en ce qu'il comprend des moyens permettant d'obtenir des images dans un plan focal, un réceptacle pour recevoir un objet, des moyens pour mettre l'objet en mouvement, des moyens pour recevoir des images en coupe prises dans le plan focal, adaptés pour mettre en oeuvre un procédé selon l'invention.

Ces caractéristiques, ainsi que d'autres, apparaîtront à la lecture de la description qui va suivre de modes de réalisation préférés de l'invention. Cette description est faite en référence aux dessins annexés, parmi lesquels :

- la figure 1 représente un système d'imagerie selon l'invention,
- la figure 2 représente les étapes d'un procédé selon l'invention d'analyse d'un objet,
- la figure 3 représente les étapes d'un procédé, mis en oeuvre dans le procédé d'analyse de la figure 2, de traitement d'images en coupe de l'objet,
- la figure 4 représente les étapes de détermination de paramètres du mouvement de l'objet par rapport à un plan de coupe,
- la figure 5 représente les étapes de détermination, selon une première variante, d'un axe de rotation de l'objet et d'une suite de translations de perturbation que l'objet subit,
- la figure 6 illustre la projection orthogonale d'une image en coupe sur un plan support d'une image spatialement voisine,
- la figure 7 représente les étapes de détermination, selon une seconde variante, d'un axe de rotation de l'objet et d'une suite de translations de perturbation que l'objet subit,
- la figure 8 représente les étapes de détermination, selon une troisième variante, d'un axe de rotation de l'objet et d'une suite de translations de perturbation que l'objet subit,
- la figure 9 illustre un cercle coupant le plan de coupe, que décrit un point de l'objet autour de l'axe de rotation,
- la figure 10 représente les étapes du début d'une détermination d'une représentation tridimensionnelle de l'objet,
- la figure 11 représente les étapes de la fin, suivant une première variante, de la détermination d'une représentation tridimensionnelle de l'objet,
- la figure 12 représente les étapes de la fin, suivant une seconde variante, de la détermination d'une représentation tridimensionnelle de l'objet,
- la figure 13 représente les étapes d'une variante de détermination d'un ensemble de points, pour la détermination de la représentation tridimensionnelle de l'objet de la figure 10,
- la figure 14 représente les étapes d'une variante de sélection de groupes de points, réalisée dans la détermination de l'ensemble de points de la figure 13,
- la figure 15 représente les étapes, suivant une troisième variante, de détermination d'une représentation tridimensionnelle de l'objet, et
- la figure 16 représente les étapes d'un réglage du système d'imagerie de la figure 1.

La description qui va suivre concerne la détermination d'une représentation tridimensionnelle d'une cellule vivante. Cependant, l'homme du métier n'aura aucun mal à transposer cette description à d'autres types d'objets, vivants ou inertes.

Par ailleurs, les relations mathématiques indiquées par la suite sont exprimées dans un repère fixe XYZ, attaché au plan de coupe $P$ (qui sera décrit plus loin) et dont le plan XY est confondu avec ce plan de coupe $P$.

En outre, dans la présente description, le terme « valeur » ne signifie pas uniquement une valeur de nombre, mais peut également être une valeur de vecteur (c'est-à-dire un vecteur particulier) ou une valeur de ligne (c'est-à-dire une ligne particulière), etc., suivant la nature de l'objet mathématique dont la valeur est considérée.

## DESCRIPTION DU SYSTEME D'IMAGERIE

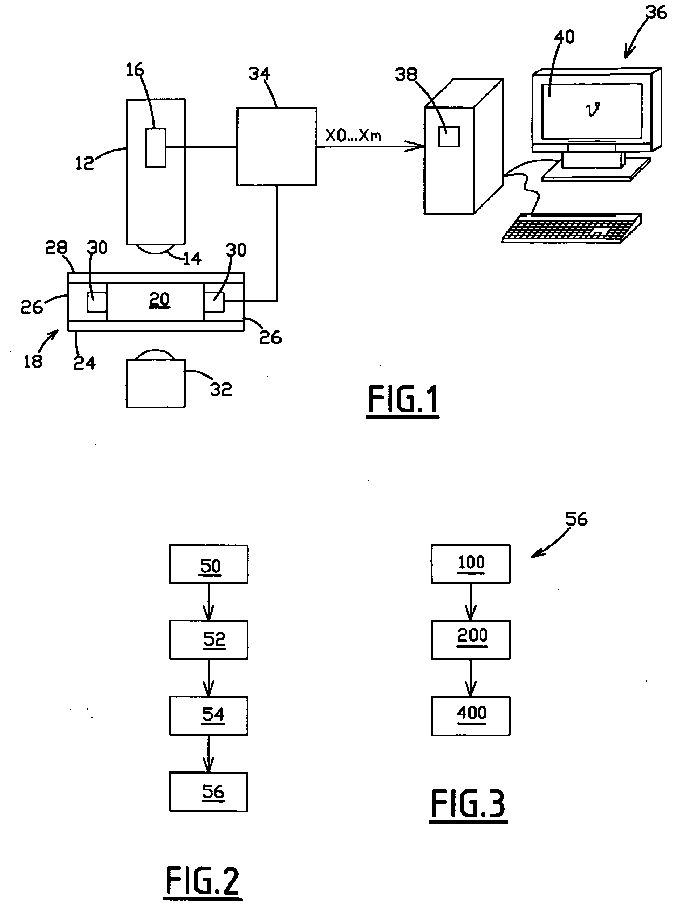

En référence à la figure 1, un système d'imagerie microscopique 10 comprend tout d'abord un microscope optique 12. Le microscope optique 12 comprend une lentille 14 définissant un plan focal $P$. Le microscope optique 12 comprend en outre une caméra 16, par exemple une caméra CCD permettant d'obtenir des images dans le plan focal $P$.

Le système d'imagerie microscopique 10 comprend en outre un réceptacle 18 pour recevoir un objet $O$ de taille microscopique, tel qu'une cellule, dans lequel une matière fluorescente a été introduite.

De manière générale, il est possible de remplacer la matière fluorescente par tout marqueur adapté à l'objet étudié, et apte à être détecté par le système d'imagerie utilisé.

Le réceptacle 18 comprend une chambre 20 destinée à contenir un microsystème fluide comprenant l'objet $O$. La chambre 20 est située en face de la lentille 14 du microscope optique 12. La chambre 20 est délimitée par un support 24, des parois latérales 26 et une vitre 28 couvrant les parois 26 afin que la lentille puisse observer le contenu de la chambre 20. La chambre 20 définit un volume $U$.

Les parois latérales comprennent des microélectrodes 30 pour créer un champ électrique, ce dernier permettant de positionner l'objet $O$.

Le système d'imagerie microscopique 10. comprend en outre un dispositif 32 d'illumination du marqueur contenu dans l'objet $O$, de sorte que chaque point $o$ de l'objet $O$ émette une luminosité $O(o)$. L'environnement de l'objet $O$ émet au contraire une luminosité très faible, voir nulle.

Le système d'imagerie microscopique 10 comprend également une unité de contrôle 34, agissant en particulier sur les microélectrodes 30 pour mettre l'objet $O$ en mouvement, et sur la caméra 16 pour prendre une séquence d'images en coupe $X_0...X_m$ dans le plan focal $P$ (qui forme ainsi un plan de coupe $P$ du volume $U$ de la chambre 20, et en particulier de l'objet $O$), à des instants de prises de vue $t_0...t_m$ respectifs.

Un repère XYZ est attaché au plan de coupe $P$. Un autre repère, dit repère de l'objet $O$, est en outre attaché à l'objet $O$. Cet autre repère est choisi, de préférence, tel qu'il est confondu avec le repère XYZ à l'instant initial $t_0$. Par ailleurs, le terme «un point de l'objet » signifie par la suite, sauf indication explicite, un point dans le repère de l'objet $O$.

Chaque image en coupe $X_k$ s'étend sur un plan support $P_k$ attaché à l'objet $O$, ce plan support $P_k$ étant confondu avec le plan de coupe $P$ au moment $t_k$ de la prise de l'image en coupe $X_k$.

Chaque image en coupe $X_k$ comprend une grille $G$ de pixels $s$. La grille $G$ est la même pour toutes les images en coupe $X_0...X_m$. Chaque pixel $s$ enregistre une valeur $X_k(s)$ de la luminosité du marqueur à la position du pixel $s$ dans le volume $U$ de la chambre 20. Dans la présente description, cette valeur de luminosité est enregistrée de manière monochrome, sous la forme d'un niveau de gris.

Ainsi, lorsqu'un point $o$ de l'objet $O$ se trouve à la position du pixel $s$, à l'instant $t_k$ de prise de l'image en coupe $X_k$, la valeur $X_k(s)$ de ce pixel $s$ est fonction notamment de la luminosité $O(o)$ du point $o$. Lorsque aucun point de l'objet $O$ ne se trouve à la position du pixel $s$, c'est la luminosité du « vide » qui est enregistrée (en fait, celle du fluide comprenant l'objet $O$). Ainsi, le fond des images en coupe $X_0...X_m$ a un niveau de gris bas.

En outre, la valeur $X_k(s)$ d'un pixel $s$ dépend également d'une fonction d'étalement du point (« Point Spread Function » ou PSF) introduisant un flou. En général, la fonction d'étalement du point a une forme allongée perpendiculairement au plan de coupe $P$.

Le système d'imagerie microscopique 10 comprend par ailleurs un dispositif informatique 36 de traitement d'image, relié à l'unité de contrôle 30 pour recevoir les images en coupe $X_0...X_m$. Un programme d'ordinateur 38 de reconstruction est installé sur le dispositif informatique 36. Le programme d'ordinateur 38 est conçu pour mettre en oeuvre un procédé de reconstruction destiné à déterminer une représentation tridimensionnelle $V$ de l'objet $O$ à partir de la séquence d'images en coupe $X_0...X_m$. Le dispositif informatique 36 est apte à exporter la représentation tridimensionnelle $V$ sous forme d'un fichier numérique et/ou à afficher cette représentation tridimensionnelle $V$ sur un écran 40.

## DESCRIPTION DU PROCEDE D'ANALYSE

Un procédé d'analyse d'un objet $O$, mis en oeuvre par le système d'imagerie 10 est illustré sur la figure 2. En référence à cette figure 2, le procédé d'analyse d'un objet $O$ comprend une étape 50 d'introduction de l'objet $O$ dans la chambre 20, puis une étape 52 de configuration de l'unité de contrôle 34 afin de faire tourner l'objet $O$ autour d'un axe de rotation fixe $L$, avec une vitesse angulaire fixe $\tau$. L'axe $L$ est défini par un point $u_0$ sur l'axe de rotation $L$ - appelé par la suite point de passage $u_0$ - et une direction $\vec{a}$ de l'axe de rotation $L$, de norme unitaire : $\|\vec{a}\|=1$. L'axe de rotation $L$ n'est pas perpendiculaire au plan de coupe $P$.

Le procédé d'analyse comprend en outre une étape 54 d'acquisition d'au moins une séquence d'images en

coupe $X_0...X_m$ à des instants de prises de vue $t_0...t_m$ respectifs, et une étape 56 de traitement des images en coupe $X_0...X_m$ par le programme d'ordinateur 38.

Dans la pratique, l'axe de rotation $L$ n'est jamais exactement celui réglé par l'unité de contrôle 34. L'invention propose donc de déterminer l'axe de rotation $L$ à partir des images en coupe $X_0...X_m$, puis de déterminer une représentation tridimensionnelle $V$ à partir de l'axe de rotation $L$ déterminé, plutôt qu'à partir de l'axe de rotation réglé à partir du réglage de l'unité de contrôle 34.

En outre, dans la pratique, le mouvement de l'objet $O$ n'est jamais parfaitement rotatif. L'erreur de mouvement par rapport à la rotation d'axe fixe est représentée par une suite de translations de perturbation $T_1...T_m$, chaque translation de perturbation étant subie par l'objet $O$ entre deux images en coupe successives $X_{k-1}, X_k$ respectives. Les translations de perturbation $T_1...T_m$ sont de direction et de valeur variables.

Ainsi, la position d'un point $o$ de l'objet $O$ à un instant de prise de vue $t_k$, en partant de la position $u$ du point $o$ à l'instant de prise de vue $t_{k-1}$ précédent, est :

$$R_{\vec{a},\tau(t_k - t_{k-1})}(u - u_0) + u_0 + T_k \,,$$

où $R_{\vec{a},\tau(t_k - t_{k-1})}$ est la matrice de rotation d'angle $\tau \cdot (t_k - t_{k-1})$ autour de l'axe de direction $\vec{a}$ passant par l'origine du repère XYZ. On remarquera que la matrice de rotation $R_{\vec{a},\alpha}$ d'angle $\alpha$ autour d'un axe de direction $\vec{a}$ passant par l'origine est donnée, selon la formule de Rodrigues, par : $R_{\vec{a},\alpha} = I + \sin\alpha [\vec{a}]_{\times} + (1 - \cos\alpha)[\vec{a}]_{\times}^2$ , où $I$ est la matrice identité 3-par-3, et $[\vec{a}]_{\times} = \begin{bmatrix} 0 & -a_3 & a_2 \\ a_3 & 0 & -a_1 \\ -a_2 & a_1 & 0 \end{bmatrix}$ avec $\vec{a} = (a_1, a_2, a_3)$.

On remarquera également que la translation de perturbation $T_k$ ne dépend pas de la position de $u_0$ sur l'axe de rotation $L$.

**Traitement des images en coupe acquises**

En référence à la figure 3, l'étape de traitement 56 mise en oeuvre par le programme d'ordinateur 38 comprend tout d'abord une étape 100 d'extension de chaque image en coupe $X_0...X_m$, au cours de laquelle sont calculées des valeurs de points entre les pixels $s$, ainsi que des valeurs de points en dehors de la grille $G$. Par exemple, les valeurs des points entre les pixels $s$ sont calculées par interpolation ou par lissage à partir des valeurs des pixels $s$ de la grille $G$ , tandis que les valeurs des points en dehors de la grille $G$ sont mis à un niveau faible de gris, par exemple 0. Par la suite, un point quelconque d'une image en coupe, pixel dont la valeur est mesurée ou point dont la valeur est calculée, sera noté $x$, tandis qu'un pixel proprement dit d'une image en coupe sera noté $s$. La valeur d'un point $x$ sera notée $X_k(x)$, tandis que la valeur d'un pixel $s$ sera notée $X_k(s)$.

L'étape 56 mise en oeuvre par le programme d'ordinateur 38 comprend en outre une étape 200 de détermination des paramètres du mouvement de l'objet $O$ par rapport au plan de coupe $P$. Au cours de cette étape de détermination des paramètres du mouvement 200, les paramètres de mouvement régulier (vitesse angulaire $\tau$, l'axe de rotation $L$) sont déterminés, et ainsi que les paramètres de mouvement de perturbation (suite de translations de perturbation $T_1...T_m$).

Les paramètres de mouvement (vitesse angulaire $\tau$, l'axe de rotation $L$ et suite de translations de perturbation $T_1...T_m$) déterminent la position de l'objet $O$ à chaque instant de prise $t_k$ d'une image en coupe $X_k$ : la position à l'instant de prise $t_k$ d'un point $o$ qui se situe à la position $u$ à l'instant initial $t_0$ est donnée par:

$$R_{\vec{a},\tau(t_k - t_0)}(u - u_0) + u_0 + \overline{T}_k \,,$$

où $\overline{T}_k = R_{\vec{a},\tau(t_k - t_1)}T_1 + R_{\vec{a},\tau(t_k - t_2)}T_2 + \cdots + R_{\vec{a},\tau(t_k - t_{k-1})}T_{k-1} + T_k$ , la translation cumulée depuis l'instant initial

$t_0$ jusqu'à l'instant $t_k$ de prise de l'image en coupe $X_k$, avec $\overline{T}_0 = 0$.

La position de l'objet $O$ à chaque instant de prise $t_k$ d'image en coupe $X_k$ détermine la position du plan de coupe $P$ à l'instant de prise $t_k$ dans un repère quelconque attaché à l'objet $O$ (et vice-versa) : la position dans le repère de l'objet $O$ choisi (qui est confondu avec le repère fixe XYZ à l'instant de prise initial $t_0$) d'un pixel $s$ du plan de coupe $P$ à l'instant de prise $t_k$ est :

$$R^t_{\vec{a},\tau(t_k-t_0)}(\pi_3 s - u_0 - \overline{T}_k) + u_0$$

avec $R^t_{\vec{a},\tau(t_k-t_0)}$ la matrice transposée de $R_{\vec{a},\tau(t_k-t_0)}$, $\pi_3 = \begin{bmatrix} 1 & 0 \\ 0 & 1 \\ 0 & 0 \end{bmatrix}$, $\pi_3 x$ est la position dans le repère tridimensionnel XYZ d'un point $x$ d'une image en coupe, en confondant le plan support de l'image en coupe avec le plan XY. La position du plan de coupe $P$ dans tout autre repère attaché à l'objet $O$ à chaque instant de prise $t_k$ découle de la position du plan de coupe $P$ dans le repère de l'objet $O$ choisi à l'instant de prise $t_k$ et de la relation entre le repère de l'objet choisi et cet autre repère.

Dans la description qui va suivre, le mouvement de l'objet $O$ par rapport au plan de coupe $P$ est exprimé dans le repère XYZ attaché au plan de coupe $P$. Bien évidemment, le mouvement de l'objet $O$ par rapport au plan de coupe $P$ pourrait être exprimé dans un autre repère de référence, qui ne serait pas obligatoirement attaché au plan de coupe. Dans ce cas, la détermination du mouvement de l'objet $O$ par rapport au plan de coupe $P$ comprendrait en outre la détermination du mouvement du plan de coupe $P$ par rapport à cet autre repère de référence.

L'étape 56 mise en oeuvre par le programme d'ordinateur 38 comprend en outre une étape 400 de détermination d'une représentation tridimensionnelle $V$ de l'objet $O$, à partir des images en coupe $X_0...X_m$ et des paramètres de mouvement $\tau$, $L$, $T_1...T_m$.

### Détermination de la vitesse angulaire en valeur absolue

Le signe de la vitesse angulaire $\tau$ indique le sens de la rotation du mouvement. Le signe de la vitesse angulaire $\tau$ est positif si la rotation se fait dans le sens positif par rapport à la direction $\vec{a}$, et négatif si la rotation se fait dans le sens négatif par rapport à la direction $\vec{a}$. Le signe de la vitesse angulaire r est connu, par exemple, d'après le réglage du système d'imagerie 10, une fois la direction $\vec{a}$ de l'axe de rotation choisie.

Si le signe de la vitesse angulaire $\tau$ n'est pas connu, il peut être choisi arbitrairement : dans ce cas, la représentation tridimensionnelle $V$ de l'objet $O$ sera au pire la représentation tridimensionnelle $V$ du miroir de l'objet $O$.

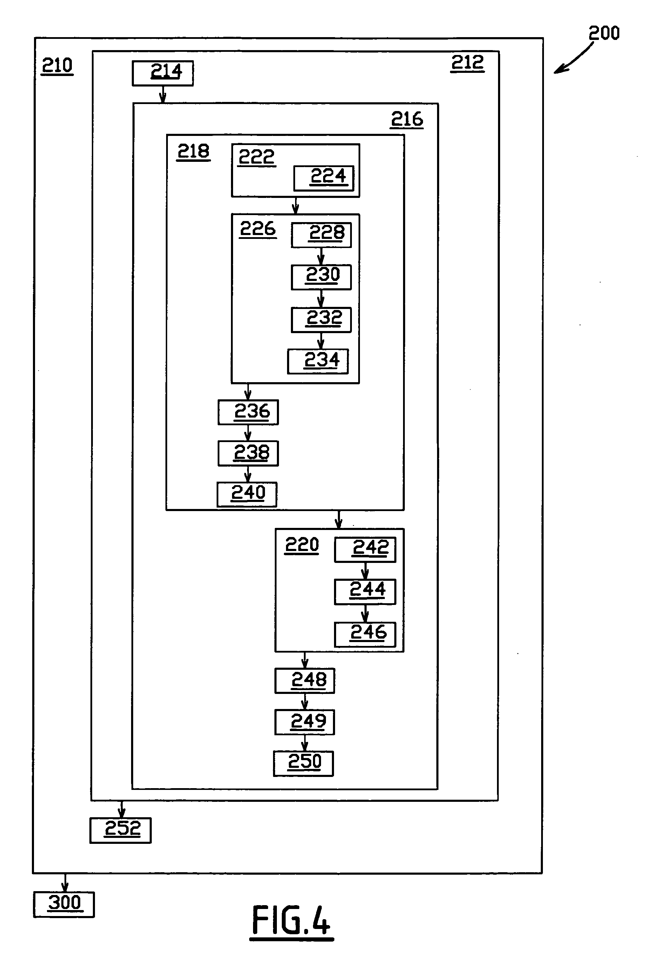

En référence à la figure 4, l'étape 200 de détermination des paramètres du mouvement comprend une étape 210 de détermination de la vitesse angulaire en valeur absolue $|\tau|$.

Cette étape 210 comprend tout d'abord une étape 212 de détermination d'une période $p > 0$ telle que chaque couple d'images en coupe $X_k$, $X_{k'}$ prises à des instants respectifs $t_k$, $t_{k'}$ séparés l'un de l'autre d'un temps sensiblement égal à un multiple (non nul) de la période $p$, soient sensiblement similaires. Cette période $p$ est ainsi la période de révolution de l'objet $O$.

Plus précisément, l'étape 212 de détermination de la période de révolution $p$ comprend une étape 214 de détermination d'un groupe initial de périodes candidates $p_1... p_n$ positives, et une étape 216 de sélection de la période de révolution $p$ parmi les périodes candidates $p_1...p_n$ du groupe initial.

Dans l'exemple décrit, l'étape de détermination 214 des périodes candidates $p_1...p_n$ consiste à choisir les périodes candidates $p_1...p_n$. De préférence, les périodes candidates $p_1...p_n$ sont choisies uniformément espacées.

### Détermination simple de la période

L'étape 216 de sélection de la période de révolution $p$ comprend, dans une variante simple, la détermination de la meilleure période parmi les périodes candidates $p_1...p_n$, en maximisant la vraisemblance suivant un modèle probabiliste choisi.

*Détermination évoluée de la période*

Cependant, pour améliorer la fiabilité de la détermination de la période de révolution *p*, une ou plusieurs sélections préalables sont réalisées sur les périodes candidates $p_1...p_n$, le modèle probabiliste tenant compte de cette ou de ces sélections.

En référence à la figure 4, l'étape 216 de sélection de la période de révolution *p* comprend deux étapes 218, 220 de sélection, afin d'obtenir, d'une part, pour chaque image en coupe $X_k$, un premier sous-ensemble respectif $p_{j(k,1)},...,p_{j(k,e)}$ de période candidates et, d'autre part, pour toutes les images en coupes $X_0...X_m$, un second sous-ensemble $p_{j(1)}...p_{j(l)}$ de période candidates.

*Sélection des premiers sous-ensembles*

La première étape 218 de sélection des premiers sous-ensembles $p_{j(k,1)},...,p_{j(k,e)}$ comprend, pour chaque image en coupe $X_k$ et pour chaque période candidate $p_j$, une étape de détermination 222 d'images en coupe sensiblement périodiques $X_{k'}$ (suivant la période candidate $p_j$) à l'image en coupe $X_k$.

L'étape 222 de détermination des images en coupe sensiblement périodiques $X_{k'}$ comprend une étape 224 de détermination des images en coupes $X_{k'}$ prises à des instants de prise de vue $t_{k'}$ séparés de l'instant $t_k$ de prise de l'image en coupe $X_k$ par un temps proche d'un multiple (non nul) de la période candidate $p_j$. « Proche » signifie que la différence entre le temps proche et le multiple (non nul) de la période candidate $p_j$, est compris dans un intervalle de temps *J* comprenant 0. De préférence, l'intervalle de temps *J* est centré sur 0. Par exemple, $J = [-\zeta,\zeta]$ avec $\zeta$ petit par rapport à chaque période candidate $p_j$, avec $\zeta \leq p_j/3$ pour l'ensemble des périodes candidates $p_j$. En variante, $\zeta$ varie en fonction de la période candidate $p_j$ en choisissant par exemple $\zeta = p_j /10$ pour chaque période candidate $p_j$.

La première étape 218 de sélection des premiers sous-ensembles $\{p_{j(k,1)},...,p_{j(k,e)}\}$ comprend en outre une étape 226 de recentrage de chaque image en coupe sensiblement périodique $X_{k'}$ par rapport à l'image en coupe $X_k$.

L'étape de recentrage 226 comprend tout d'abord une étape de sélection 228 de pixels lumineux, dans l'image en coupe $X_k$ et dans l'image en coupe sensiblement périodique $X_{k'}$. De préférence, les pixels sélectionnés sont ceux dont le niveau de gris est supérieur à un seuil prédéterminé $\alpha$, ce seuil étant par exemple le *q*-quantile de niveau de gris des images en coupes $X_0...X_m$ (ce qui signifie que la proportion des pixels des images en coupes $X_0...X_m$ qui ont un niveau de gris inférieur ou égal à $\alpha$ est sensiblement égale à q, et celle des pixels qui ont un niveau de gris supérieur à $\alpha$ est sensiblement égale à *1-q*), avec *q* valant par exemple entre 60% et 95%.

L'étape de recentrage 226 comprend en outre une étape 230 de calcul, d'une part, d'un premier centre $d(X_k)$ des points lumineux sélectionnés dans l'image en coupe $X_k$ et, d'autre part, le calcul d'un second centre $d(X_{k'})$ des points lumineux sélectionnés dans l'image en coupe $X_{k'}$.

Le centre d'une image $X$ ($X_k$ ou $X_{k'}$) est donné par :

$$d(X) = \frac{\sum_s 1_{X(s)>\alpha}\, s}{\sum_s 1_{X(s)>\alpha}}$$

où $1_{A>B}$ est la fonction indicatrice : $1_{A>B} = 1$ si $A>B$, et $1_{A>B} = 0$ sinon. L'étape de recentrage 226 comprend en outre la détermination 232 d'un décalage $d_{k,k'}$ entre les centres des points lumineux de l'image en coupe $X_k$ et de l'image en coupe sensiblement périodique $X_{k'}$ : $d_{k,k'} = d(X_k) - d(X_{k'})$.

L'étape de recentrage 226 comprend en outre une étape 234 de translation de l'image en coupe sensiblement périodique $X_{k'}$ du décalage $d_{k,k'}$ entre les centres, afin d'obtenir une image en coupe sensiblement périodique centrée, notée $Trans(X_{k'},d_{k,k'})$. L'image en coupe sensiblement périodique centrée $Trans(X_{k'},d_{k,k'})$ est calculée, pour chaque pixel *s*, par :

$$Trans(X_{k'}, d_{k,k'})(s) = X_{k'}(s - d_{k,k'}) \,.$$

La première étape 218 de sélection des premiers sous-ensembles $p_{j(k,l)},...,p_{j(k,e)}$ comprend en outre une étape 236 de détermination d'une distance T(*k*,*k'*) entre l'image en coupe $X_k$ et chaque image en coupe sensiblement périodique centrée $Trans(X_{k'},d_{k,k'})$. De préférence, la distance T(*k,k'*) est donnée par la relation suivante :

$$\forall\, 0 \le k, k' \le m, \mathsf{T}(k,k') = \chi(X_k, Trans(X_{k'}, d_{k,k'})),$$

avec $\chi$ une fonction distance, $\chi(X,Y)$ mesure la différence entre deux image $X$ et $Y$. La fonction distance $\chi$ est par exemple une distance quadratique des niveaux de gris des pixels entre les deux images, donnée par :

$$\chi(X,Y) = \sum_s \big(X(s) - Y(s)\big)^2.$$

La première étape 218 de sélection des premiers sous-ensembles $p_{j(k,\mathsf{l})},...,p_{j(k,e)}$ comprend en outre une étape 238 de détermination d'un niveau de similitude périodique $sim(X_k, p_j)$ de l'image en coupe $X_k$ à partir des distances $\mathsf{T}(k,k')$.

Le niveau de similitude périodique $sim(X_k, p_j)$ caractérise le niveau de similitude de l'image en coupe $X_k$ avec les images en coupe sensiblement périodiques $X_{k'}$, pour la période candidate $p_j$. De préférence, l'étape 238 de détermination d'un niveau de similitude périodique $sim(X_k, p_j)$ comprend une étape de calcul de l'inverse de la similitude par la relation suivante :

$$sim^{-1}(X_k, p_j) \;=\; \begin{cases} \sum_{r \ne 0} v(k,j,r) \big/ \sum_{r \ne 0} h(k,j,r) & si \;\sum_{r \ne 0} h(k,j,r) > 0 \\ \infty & sinon \end{cases}.$$

avec :

$$v(k,j,r) \;=\; \sum_{i:-\zeta \le t_i - rp_j \le \zeta} w(t_i - rp_j)\mathsf{T}(k,i),$$

$$h(k,j,r) \;=\; \sum_{i:-\zeta \le t_i - rp_j \le \zeta} w(t_i - rp_j),$$

où $r$ est un nombre entier non nul, $\zeta$ est défini de la même manière que pour l'étape 224 de détermination des images en coupe sensiblement périodiques, et $w$ *est* une fonction de pondération positive définie sur l'intervalle $J = [-\zeta, \zeta]$. De préférence, $w$ est symétrique par rapport à 0 ($w(t) = w(-t)$), et les valeurs élevées de $w$ sont concentrées autour de 0. Par exemple $w(t) = \exp(-ct^2)$ avec $c$ une constante positive. La fonction $w$ permet de diminuer l'influence des images en coupe sensiblement périodiques $X_{k'}$ qui s'éloignent du multiple de la période candidate $p_j$.

La première étape 218 de sélection des premiers sous-ensembles $p_{j(k,1)},...,p_{j(k,e)}$ comprend en outre une étape 240 de sélection, parmi les périodes candidates $p_1...p_n$, pour chaque image en coupe $X_k$, d'un premier sous-ensemble $p_{j(k,\mathsf{l})},...,p_{j(k,e)}$ regroupant les périodes candidates $p_1...p_n$ ayant les niveaux de similitude les plus élevés (c'est-à-dire les plus petites valeurs de $sim^{-1}(X_k, p_j)$). De préférence, un nombre prédéterminé e de périodes candidates sont sélectionnées. De préférence également, ce nombre e est choisi entre 1 et 15.

*Sélection du second sous-ensemble*

La seconde étape 220 de sélection du second sous-ensemble $p_{j(\mathsf{l})}...p_{j(l)}$ de périodes candidates comprend, pour chaque période candidate $p_j$, une étape 242 de calcul d'un nombre d'apparitions $S(p_j)$ de la période candidate $p_j$, correspondant au nombre de premiers sous-ensembles $p_{j(k,\mathsf{l})},...,p_{j(k,e)}$ dans lesquels la période candidate $p_j$ apparaît.

Les valeurs du nombre d'apparitions $S$ pour les périodes candidates $p_1...p_n$ sont par exemple données par la relation :

$$\forall 1 \le j \le n, S(p_j) = \sum_{k=0}^{m} 1_{p_j \in \{p_{j(k,1)},\ldots,p_{j(k,e)}\}},$$

où $1_{A \in B}$ est la fonction indicatrice : $1_{A \in B} = 1$ si $A \in B$, et $1_{A \in B} = 0$ sinon.

La seconde étape 220 de sélection du second sous-ensemble $p_{j(l)}\cdots_{pj(l)}$ de période candidate comprend en outre, pour chaque période candidate $p_j$, une étape 244 de calcul d'une dispersion $\Im$ des valeurs du nombre d'apparition $S$, autour de chaque multiple (supérieur ou égal à 1) de la période candidate $p_j$. La dispersion $\Im$ pour une période candidate $p_j$ indique si des valeurs élevées du nombre d'apparition $S$ sont concentrées (dispersion faible) ou dispersées (dispersion élevée) autour de chaque multiple (supérieur ou égal à 1) de la période candidate $p_j$.

De préférence, la dispersion $\Im$ d'une période candidate $p_j$ est calculée de telle sorte que, plus une autre période candidate $p_{j'}$ s'éloigne du plus proche multiple (supérieur ou égal à 1) de la période candidate $p_j$, plus la valeur du nombre d'apparition $S$ de cette autre période candidate $p_{j'}$ contribue à la dispersion.

De préférence, la dispersion $\Im$ de la période candidate $p_j$ est donnée par la relation :

$$\forall 1 \le j \le n, \Im(p_j) = \sum_{i=1}^{n} \frac{|[\frac{p_i}{p_j}]p_j - p_i|}{p_j} S(p_i),$$

où $[x]$ est l'entier le plus proche de $x$.

La seconde étape 220 de sélection du second sous-ensemble $p_{j(l)}\cdots_{pj(l)}$ de périodes candidates comprend en outre une étape 246 de sélection, parmi les périodes candidates $p_j$, du second sous-ensemble $p_{j(1)}\ldots p_{j(1)}$ des périodes candidates ayant les dispersions $\Im$ les plus faibles. De préférence, un nombre prédéterminé $l$ de périodes candidates sont sélectionnées. De préférence également, ce nombre $l$ est choisi entre 4 et 40.

*Sélection de la période à partir des premiers sous-ensembles, du second sous-ensemble, et d'une loi de probabilité*

La sélection 216 de la période de révolution $p$ comprend en outre une étape 248 de détermination d'une loi de probabilité $P_p$ décrivant la probabilité qu'une période $p_j$ soit choisie, au cours de l'étape 218, dans au moins un des premiers ensembles $p_{j(k,1)},\ldots,p_{j(k,e)}$. La loi de probabilité $P_p$ est définie avec la période de révolution $p$ comme paramètre.

La sélection 216 de la période de révolution $p$ comprend en outre une étape 249 de calcul d'un histogramme $h$ des périodes candidates sélectionnées à l'étape 218. Il a été remarqué que les grandes valeurs de l'histogramme $h$ sont en général concentrées autour de la vraie valeur de la période de révolution $p$ et des multiples de la vraie valeur de la période de révolution $p$.

De préférence, on considère que les sélections pour obtenir les périodes candidates à l'étape 218 sont approximativement indépendantes, et que le choix de chacune des périodes candidates à l'étape 218 est aléatoirement réalisé selon une loi de probabilité $P_p$.

Pour cela, la loi de probabilité $P_p$, ayant comme paramètre la période de révolution $p$, est telle que la forme de la fonction de probabilité $P_p$ puisse « épouser » celle de l'histogramme $h$ à un facteur de dilatation près, en faisant varier la valeur du paramètre $p$.

Plus précisément, on considère que chaque période $p_j$ obtenue à l'étape 218 est sélectionnée soit aléatoirement, avec une faible probabilité $\beta$, parmi toutes les périodes candidates $p_1\ldots p_n$ selon la loi uniforme, soit avec la probabilité $1 - \beta$ par un choix alternatif qui consiste à choisir une période autour d'un multiple (supérieur ou égal à 1) de la période de révolution $p$. Ce choix alternatif est réalisé en choisissant d'abord un multiple $ip$ ($i$ un nombre entier et $i \ge 1$) avec une probabilité $b_i$ et ensuite en choisissant $p_j$ autour de $ip$ ($ip$ étant déjà choisi) avec la probabilité $\bar{v}_{ip}(p_j)$.

Dans ce cas, la loi de probabilité $P_p$ est définie par la relation :

$$\forall 1 \le j \le n, P_p(p_j) = \frac{\beta}{n} + (1-\beta)\sum_{i=1}^{\ell(p)} b_i \overline{v}_{ip}(p_j),$$

où, $\ell(p)$ le nombre des multiples de $p$.

La loi $P_p$ est un mélange de la loi uniforme sur l'ensemble des périodes candidates $p_1...p_n$, et des lois $\overline{v}_{ip}$ avec $1 \le i \le \ell(p)$.

La probabilité $\overline{v}_{ip}(p_j)$ est de préférence la translation d'une fonction de support $v$ de la valeur $ip$ : $v_{ip}(x) = v(x-ip)$. De préférence, on choisit la fonction de support $v$ finie et positive pour définir $b_i$ et $\overline{v}_{ip}$. De préférence également, $v$ est symétrique autour de 0 (c'est-à-dire que $v(-x) = v(x)$) et centrée sur 0. Par exemple, on prendra $v(x) \propto e^{-dx^2}1_{|x| \le \delta}$, ou bien $v(x) \propto (\delta-|x|)1_{|x| \le \delta}$ pour $d$ et $\delta$ constantes positives données.

De préférence $\ell(p) = \max\{i \in \mathbb{N}^* : \{p_1,...,pn\} \cap supp(v_{ip}) \ne \varnothing\}$. avec $supp(v_{ip}) = \{x: v_{ip}(x) : \ne 0\}$, et $\overline{v}_{ip}(p_j) = v_{ip}(p_j)/c_i$,

$$b_i = \frac{c_i}{\sum_{k=1}^{\ell(p)} c_k}, \text{ avec } c_i = \sum_{k=1}^{n} v_{ip}(p_k).$$ En pratique $\beta$ est choisi entre 0 et 25%.

La sélection 216 de la période de révolution $p$ comprend en outre une étape 250 de détermination de la période de révolution $p$, comme étant la période du second sous-ensemble de périodes candidates $p_{j(l)}...p_{j(l)}$ qui maximise la vraisemblance $Vrais(p)$ (ou, de manière équivalente, la log-vraisemblance $logVrais(p)$) associée à la loi de probabilité $P_p$ précédente, étant donnés les premiers sous-ensembles de périodes sélectionnées $p_{j(k,l)},...p_{j(k,e)}$, $0 \le k \le m$. La log-vraisemblance est donnée par :

$$\log Vrais(p) = \sum_{j=1}^{n} S(p_j) \log P_p(p_j).$$

En variante, l'étape 212 de détermination de la période dé révolution $p$ ne comprend pas l'étape 220 de détermination du second sous-ensemble, et, à l'étape 250, la période de révolution $p$ est déterminée comme étant la période de l'ensemble de périodes candidates $p_1...p_n$, maximisant la vraisemblance $Vrais(p)$ précédente.

L'étape 210 de détermination de la vitesse angulaire en valeur absolue $|\tau|$ comprend alors une étape 252 de calcul de la vitesse angulaire en valeur absolue $|\tau|$ à partir de la période de révolution $p$ :

$$|\tau| = 2\pi/p.$$

Une fois la direction $\vec{a}$ de l'axe de rotation choisie, la vitesse angulaire $\tau$ est déterminée du sens connu (ou supposé) de rotation par rapport à la direction $\vec{a}$ de l'axe de rotation, par la relation suivante :

$$\tau = \begin{cases} 2\pi/p & pour\ des\ rotations\ positives \\ -2\pi/p & pour\ des\ rotations\ négatives \end{cases}.$$

L'étape 200 de détermination des paramètres du mouvement comprend en outre une étape 300 de détermination de l'axe de rotation $L$ et de la suite de translations de perturbation $T_1...T_m$.

### Première variante pour déterminer l'axe de rotation et la suite de translations de perturbation

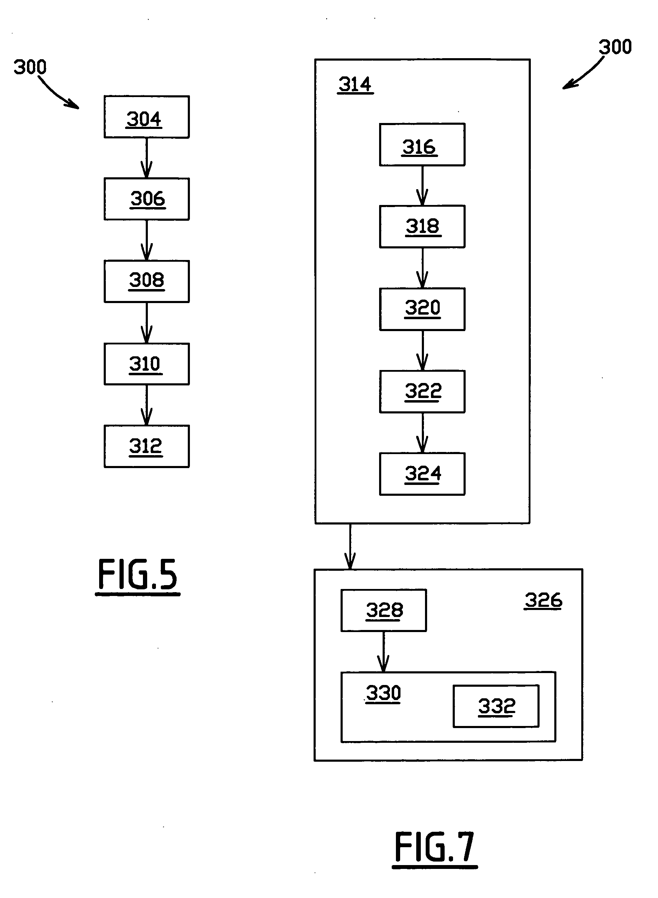

La figure 5 illustre une première variante de l'étape 300 de détermination de l'axe de rotation $L$ et de la suite de translations de perturbation $T_1...T_m$.

L'étape 300 de détermination de l'axe de rotation $L$ et de la suite de translations de perturbation $T_1...T_m$ est mise en oeuvre en déterminant un axe de rotation $L$ et une suite de translations de perturbation $T_1...T_m$ telles que la valeur $X_k(s)$ de chaque pixel $s$ de chaque image en coupe $X_k$, soit sensiblement égale, pour chaque image en coupe spatialement voisines $X_{k'}$ (c'est-à-dire dont le plan support $P_{k'}$ est spatialement voisin du plan support $P_k$ de l'image en coupe $X_k$), à la valeur $X_{k'}(x')$ d'un point $x'$ « proche » de ce pixel $s$, sur l'image en coupe spatialement voisine $X_{k'}$. Le point le plus proche $x'$ est déterminé suivant un critère de proximité donné.

Plus précisément, l'étape 300 de détermination de l'axe de rotation $L$ et de la suite de translations de perturbation $T_1...T_m$ comprend une étape 304 de détermination, pour chaque image en coupe $X_{k'}$ des images en coupe spatialement voisines $X_{k'}$ de cette image en coupe $X_k$.

Une image en coupe $X_{k'}$ est spatialement voisine de l'image en coupe $X_{k'}$ lorsque l'angle séparant leurs plans support respectifs $P_k$, $P_{k'}$, est inférieur à une valeur prédéterminée $\Delta_1$. L'angle est de préférence déterminé à partir de la vitesse angulaire en valeur absolue $|\tau|$ et des instants $t_k$, $t_{k'}$ de prise des deux images en coupe $X_k$, $X_{k'}$. Cette valeur prédéterminée $\Delta_1$ est de préférence prise inférieure ou égale à 12 degrés. Pour une image en coupe $X_k$, les images en coupes spatialement voisines $X_{k'}$ sont donc les images en coupe vérifiant :

il existe un entier $q$ tel que $|\tau|(t_k - t_{k'}) = 2\pi q + r$, avec $|r| \leq \Delta_1$.

La condition précédente sur l'angle séparant les images en coupe $X_k$ et $X_{k'}$ est équivalente à une condition sur l'intervalle de temps séparant les prises des deux images en coupe.

L'étape 300 de détermination de l'axe de rotation $L$ et de la suite de translations de perturbation $T_1...T_m$ comprend en outre une étape 306 de choix d'un critère de proximité.

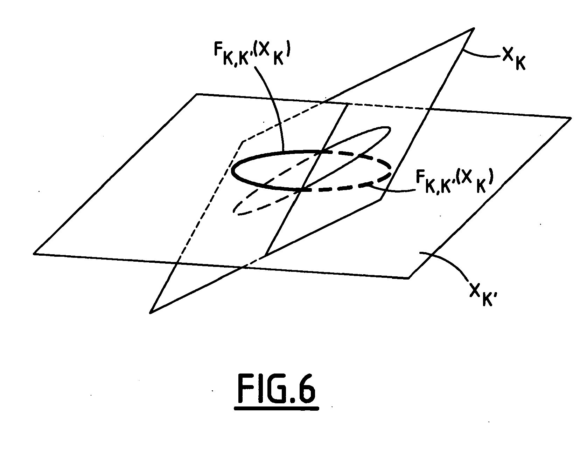

En référence à la figure 6, de préférence, ce critère de proximité est que le point $x'$ d'une image en coupe spatialement voisine $X_{k'}$, le plus proche d'un pixel $s$ de l'image en coupe $X_k$, est la position $Proj_{k,k'}(S) = x'$ de la projection orthogonale $o'$ d'un point $o$ de l'objet $O$ sur le plan support $P_k$ de l'image en coupe $X_k$, situé sur le pixel $s$ de l'image en coupe $X_k$, sur le plan support $P_{k'}$ de l'image spatialement voisine $X_{k'}$.

Ce choix de ce critère de proximité est particulièrement adapté dans le cas d'une fonction d'étalement du point ayant une forme allongée perpendiculairement au plan de coupe $P$.

Ainsi, de retour à la figure 5, l'étape 300 de détermination de l'axe de rotation $L$ et de la suite de translations de perturbation $T_1...T_m$ comprend en outre une étape 308 de calcul de la projection orthogonale $F_{k,k'}(X_k)$ de l'image en coupe $X_k$ sur le plan support $P_{k'}$ de chaque image en coupe spatialement voisine $X_{k'}$ de l'image en coupe $X_k$.

De préférence, l'étape 308 de calcul de la projection orthogonale $F_{k,k'}(X_k)$ est réalisée par le calcul d'une transformation affine $Aff(Q_{k,k'}, v_{k,k'}, X_k)$ de l'image en coupe $X_k$, la transformation affine $Aff(Q_{k,k'}, v_{k,k'}, X_k)$ ayant une composante de transformation linéaire $Q_{k,k'}(\vec{a}, \tau)$ et une composante de translation $v_{k,k'}(u_0, \vec{a}, \tau, T_1...T_m)$ fonctions de, respectivement, d'une part, la direction $\vec{a}$ de la valeur d'axe de rotation et la vitesse de rotation $\tau$ et, d'autre part, la valeur d'axe de rotation $L$, la vitesse de rotation $\tau$ et la valeur de suite de translations de perturbation $T_1...T_m$. Ainsi :

$$F_{k,k'}(X) = Aff(Q_{k,k'}(\vec{a}, \tau),\ v_{k,k'}(u_0, \vec{a}, \tau, T_1...T_m),\ X),$$

avec $Aff(Q,v,X)$ la transformée affine de $X$ définie par :

$$\forall x,\ Aff(Q, v, X)(x) = X(Q^{-1}(x - v))$$

avec $Q$ une matrice 2x2 inversible et $v$ un vecteur de translation, et

$$Q_{i,j}(\vec{a}, \tau)\ =\ \pi_2 R_{\vec{a}, \tau(t_j - t_i)} \pi_3,$$

$$v_{i,j}(u_0, \vec{a}, \tau, T_1...T_m)\ =\ (\pi_2 - \pi_2 R_{\vec{a}, \tau(t_j - t_i)})u_0 + \pi_2 \overline{T}_j - \pi_2 R_{\vec{a}, \tau(t_j - t_i)}\overline{T}_i,$$

où $\pi_2 = \begin{bmatrix} 1 & 0 & 0 \\ 0 & 1 & 0 \end{bmatrix}$ est la projection sur le plan XY, $\pi_3 = \begin{bmatrix} 1 & 0 \\ 0 & 1 \\ 0 & 0 \end{bmatrix}$ , $\pi_3 x$ est la position dans le repère tridimensionnel XYZ d'un point $x$ d'une image en coupe, en confondant le plan support de l'image en coupe avec le plan XY,

$$\overline{T}_k = R_{\vec{a},\tau(t_k-t_1)}T_1 + R_{\vec{a},\tau(t_k-t_2)}T_2 + \cdots + R_{\vec{a},\tau(t_k-t_{k-1})}T_{k-1} + T_k \;,\; \text{la translation cumulée depuis l'instant initial}$$

$t_0$ jusqu'à l'instant $t_k$ de prise de l'image en coupe $X_k$ avec $\overline{T}_0 = 0$, et on remarque que pour chaque possible direction $\vec{a}$ de l'axe de rotation, le signe de la vitesse angulaire $\tau$ est déterminé du sens connu (ou supposé) de rotation par rapport à la direction $\vec{a}$ de l'axe de rotation, par exemple d'après le réglage du système d'imagerie 10, par la relation suivante :

$$\tau = \begin{cases} |\tau| & \textit{pour des rotations positives} \\ -|\tau| & \textit{pour des rotations négatives} \end{cases},$$

(si le sens de rotation est choisi arbitrairement : dans ce cas, la représentation tridimensionnelle $V$ de l'objet $O$ sera au pire la représentation tridimensionnelle $V$ du miroir de l'objet $O$).

L'étape 300 de détermination de l'axe de rotation $L$ et de la suite de translations de perturbation $T_1...T_m$ comprend en outre une étape 310 de comparaison des valeurs $X_k(s)$ des pixels $s$ de chaque image en coupe $X_k$ avec les valeurs $X_k(x')$ des points $x'$ les plus proches des images en coupe spatialement voisines $X_{k'}$. De préférence, l'étape 310 de comparaison est réalisée par le calcul d'une distance $\chi(Aff(Q_{k,k'}, v_{k,k'}, X_k), X_{k'})$ entre la transformée affine $Aff(Q_{k,k'}, v_{k,k'}, X_k)$ de l'image en coupe $X_k$ et l'image en coupe voisine $X_{k'}$.

L'étape 300 de détermination de l'axe de rotation $L$ et de la suite de translations de perturbation $T_1...T_m$ comprend en outre une étape 312 de détermination d'un axe de rotation $L$ et d'une suite de translations de perturbation $T_1...T_m$ dont les valeurs minimisent une fonction de coût $E$ comprenant une première partie fonction des distances calculées, de sorte que la réduction des distances calculées entraîne la réduction de la fonction de coût $E$.

De préférence, la fonction de coût $E$ comprend également une seconde partie qui dépend, pour une suite de translations de perturbation $T_1...T_m$, de l'amplitude des translations de la suite de translations de perturbation $T_1...T_m$. Cette seconde partie comprend ainsi une fonction de régularisation Reg, qui donne une valeur faible lorsque les translations de la suite de translations de perturbation $T_1...T_m$ ont une amplitude faible, et donne une valeur élevée dans le cas contraire. La fonction de régularisation $Reg$ est de préférence une norme quadratique, par exemple donnée par la relation :

$$Reg(T_1...T_m) = \|T\|_M^2 \equiv T'MT,$$

avec $M$ une matrice symétrique et définie positive, et $T=T_1...T_m$ s'écrit sous la forme d'un vecteur colonne avec les translations $T_k$ les unes à la suite des autres. Par exemple, $M=I_{3m}$, la matrice identité $3m$x$3m$.

De préférence, la fonction de coût $E$ est donnée par la relation suivante :

$$E(\vec{a}, x_0, T_1...T_m) = \sum_{k} \sum_{k \in N_k} \chi(F_{k,k'}(X_k), \; X_{k'}) + \lambda Reg(T_1...T_m),$$

avec $N_k$ l'ensemble des indices des images en coupe spatialement voisines de l'image en coupe $X_k$, $\chi(F_{k,k'}(X_k), X_{k'})$ une mesure de la distance entre, d'une part, la projection $F_{k,k'}(X_k)$ de l'image en coupe $X_k$ sur le plan support $P_{k'}$ de l'image en coupe spatialement voisine $X_{k'}$ et, d'autre part, l'image en coupe spatialement voisine $X_{k'}$, et $\lambda \geq 0$ est un paramètre de compromis entre, d'une part, les distances entre les projections $F_{k,k'}(X_k)$ des images en coupe $X_k$ et les images en coupe spatialement voisines $X_{k'}$ des images en coupe $X_k$, et, d'autre part, la régularisation de translations $T_1...T_m$.

**_Deuxième variante pour déterminer l'axe de rotation et la suite de translations de perturbation_**

Une deuxième variante de l'étape 300 de détermination de l'axe de rotation _L_ et de la suite de translations de perturbation _T₁...Tₘ_ est représentée sur la figure 7. Cette deuxième variante de l'étape 300 reprend certaines étapes de la première variante de l'étape 300.

En référence à cette figure, l'étape 300 de détermination de l'axe de rotation _L_ et de la suite de translations de perturbation $T_1...T_m$ comprend, la vitesse angulaire en valeur absolue $|\tau|$ étant connue, une étape 314 de détermination de la direction $\vec{a}$ de l'axe de rotation _L_ , avant une étape 326 de détermination d'un point de passage $u_0$ de l'axe de rotation _L_ et de la suite de translations de perturbation $T_1...T_m$.

_Détermination de la direction de l'axe de rotation_

L'étape 314 de détermination de la direction $\vec{a}$ de l'axe de rotation _L_ comprend une étape 316, identique à l'étape 304 précédente, de détermination, pour chaque image en coupe $X_k$, des images en coupe spatialement voisines $X_{k'}$ de cette image en coupe $X_k$.

L'étape 314 de détermination de la direction $\vec{a}$ de l'axe de rotation _L_ comprend en outre une étape 318, identique à l'étape 306 précédente, de choix d'un critère de proximité, selon lequel le point _x'_ d'une image en coupe spatialement voisine $X_{k'}$, le plus proche d'un pixel _s_ de l'image en coupe $X_k$, est la position $Proj_{k,k'}(s)$ de la projection orthogonale _o'_ du point de l'objet _o_ confondu avec le pixel _s_ de l'image en coupe $X_k$, sur le plan support $P_{k'}$ de l'image spatialement voisine $X_{k'}$.

Ainsi, l'étape 314 de détermination de la direction $\vec{a}$ de l'axe de rotation _L_ comprend en outre une étape 320, de calcul de la projection orthogonale $F_{k,k'}(X_k)$ de l'image en coupe $X_k$ sur le plan support $P_{k'}$ de chaque image en coupe spatialement voisine $X_{k'}$ de l'image en coupe $X_k$.

De préférence, l'étape 320 de calcul de la projection orthogonale $F_{k,k'}(X_k)$ est réalisée par le calcul d'une transformation affine $Aff(Q_{k,k'}, v_{k,k'}, X_k)$ de l'image en coupe $X_k$, la transformation affine $Aff(Q_{k,k'}, v_{k,k'}, X_k)$ ayant une composante de transformation linéaire $Q_{k,k'}(\vec{a},\tau)$ et une composante de translation $v_{k,k'}$. La composante de transformation linéaire $Q_{k,k'}(\vec{a},\tau)$ est une fonction d'une direction $\vec{a}$ d'axe de rotation et de la vitesse de rotation $\tau$, tandis que, contrairement à la première variante, la composante de translation $v_{k,k'}$ est considérée comme une variable, et n'est donc pas exprimée en fonction des paramètres de mouvement de l'objet _O_. La famille des vecteurs de translation dans les transformations affines $F_{k,k'}$ sera notée dans la suite $v=(v_{k,k'})_{0\leq k\leq m, k'\in N_k}$. La projection orthogonale $F_{k,k'}(X_k)$ s'exprime donc de la manière suivante :

$$F_{k,k'}(X) = Aff(Q_{k,k'}(\vec{a},\tau),\ v_{k,k'},\ X)\,,$$

avec _Aff(Q,v,X)_ la transformée affine de _X_ définie par :

$$\forall x,\ Aff(Q,v,X)(x) = X(Q^{-1}(x-v))$$

avec _Q_ une matrice 2x2 inversible et _v_ un vecteur de translation, et

$$Q_{i,j}(\vec{a},\tau)\ =\ \pi_2 R_{\vec{a},\tau(t_j-t_i)}\pi_3\,,$$

où $\pi_2 = \begin{bmatrix} 1 & 0 & 0 \\ 0 & 1 & 0 \end{bmatrix}$ est la projection sur le plan XY, $\pi_3 = \begin{bmatrix} 1 & 0 \\ 0 & 1 \\ 0 & 0 \end{bmatrix}$, $\pi_3 x$ est la position dans le repère tridimensionnel XYZ d'un point _x_ d'une image en coupe, en confondant le plan support de l'image en coupe avec le plan XY, et on remarque que pour chaque possible direction $\vec{a}$ de l'axe de rotation, le signe de la vitesse angulaire $\tau$ est déterminé du sens connu (ou supposé) de rotation par rapport à la direction $\vec{a}$ de l'axe de rotation, par exemple d'après le réglage du système d'imagerie 10, par la relation suivante :

$$\tau = \begin{cases} |\tau| & \textit{pour des rotations positives} \\ -|\tau| & \textit{pour des rotations négatives} \end{cases},$$

(si le sens de rotation est choisi arbitrairement : dans ce cas, la représentation tridimensionnelle $V$ de l'objet $O$ sera au pire la représentation tridimensionnelle $V$ du miroir de l'objet $O$).

L'étape 314 de détermination de la direction $\vec{a}$ de l'axe de rotation $L$ comprend en outre une étape 322 de comparaison des valeurs $X_k(s)$ des pixels $s$ de chaque image en coupe $X_k$ avec les valeurs $X_{k'}(x')$ des points $x'$ les plus proches des images en coupe spatialement voisines $X_{k'}$. De préférence, l'étape 322 de comparaison est réalisée par le calcul d'une distance $\chi(Aff(Q_{k,k'}, v_{k,k'}, X_k), X_{k'})$ entre la transformée affine $Aff(Q_{k,k'}, v_{k,k'}, X_k)$ de l'image en coupe $X_k$ et l'image en coupe voisine $X_{k'}$.

L'étape 314 de détermination de la direction $\vec{a}$ de l'axe de rotation $L$ comprend en outre une étape 324 de minimisation d'une fonction de coût $U$, dans laquelle les composantes de translation $v_{k,k'}$ ne sont pas exprimées en fonction des paramètres du mouvement, mais sont laissées comme variables de la fonction de coût $U$.

L'étape 324 de minimisation de la fonction de coût $U$ revient donc à trouver la direction $\vec{a}$ d'axe de rotation et la famille de composantes de translation $v_{k,k'}$ qui minimisent la fonction de coût $U$.

De préférence, la fonction de coût $U$ est donnée par la relation :

$$U(\vec{a}, v) = \sum_k \sum_{k' \in N_k} \chi(Aff(Q_{k,k'}(\vec{a}, \tau), v_{k,k'}, X_k), X_{k'}),$$

avec $N_k$ l'ensemble des indices des images en coupe voisines à l'image en coupe $X_k$, $\chi(Aff(Q_{k,k'}(\vec{a}, \tau), v_{k,k'}, X_k), X_{k'})$ une mesure de la distance entre la transformée affine de l'image en coupe $X_k$ et l'image en coupe spatialement voisine $X_{k'}$.

Dans la définition précédente de la fonction de coût $U$, les composantes de translation $v_{k,k'}$ sont des variables indépendantes de $u_0, \vec{a}, \tau, T_1 ... T_m$.

*Détermination d'un point de passage de l'axe de rotation et de la suite de translations de perturbation*

La direction $\vec{a}$ de l'axe de rotation $L$ et des composantes de translation $v_{k,k'}$, appelées par la suite composantes de translation de référence $v_{k,k'}$, ayant été déterminées, l'étape 326 de détermination d'un point de passage $u_0$ de l'axe de rotation $L$ et de la suite de translations de perturbation $T_1 ... T_m$ comprend une étape 328 d'expression de composantes de translation $v_{k,k'}(u_0, \vec{a}, T_1 ... T_m)$ en fonction d'une suite de translations de perturbation $T_1 ... T_m$ et d'un point de passage $u_0$, la direction $\vec{a}$ de l'axe de rotation $L$ et la vitesse de rotation $\tau$ étant connues :

$$v_{k,k'}(u_0, \vec{a}, \tau, T_1 ... T_m) = (\pi_2 - \pi_2 R_{\vec{a}, \tau(t_{k'} - t_k)}) u_0 + \pi_2 \overline{T}_{k'} - \pi_2 R_{\vec{a}, \tau(t_{k'} - t_k)} \overline{T}_k,$$

où $\overline{T}_k = R_{\vec{a}, \tau(t_k - t_1)} T_1 + R_{\vec{a}, \tau(t_k - t_2)} T_2 + \cdots + R_{\vec{a}, \tau(t_k - t_{k-1})} T_{k-1} + T_k$, la translation cumulée depuis l'instant initial $t_0$ jusqu'à l'instant $t_k$ de prise de l'image en coupe $X_k$ avec $\overline{T}_0 = 0$.

L'étape 326 de détermination d'un point de passage $u_0$ de l'axe de rotation $L$ et de la suite de translations de perturbation $T_1 ... T_m$ comprend en outre une étape 330 de détermination de la suite de translations de perturbation $T_1 ... T_m$ et du point de passage $u_0$, tels que les composantes de translation $v_{k,k'}(u_0, \vec{a}, \tau, T_1 ... T_m)$ approchent les composantes de translation de référence $v_{k,k'}$.

De préférence, l'étape 330 de détermination de la suite de translations de perturbation $T_1 ... T_m$ et du point de passage $u_0$ comprend une étape 332 de minimisation d'une fonction de coût $K$ qui comprend une première partie représentant, pour une suite de translations $T_1 ... T_m$ de perturbation et un point de passage $u_0$, une distance entre les composantes de translation $v_{k,k'}$ de référence et les composantes de translation $v_{k,k'}(u_0, \vec{a}, \tau, T_1 ... T_m)$ exprimées en fonction de la suite de translations de perturbation $T_1 ... T_m$ et du point de passage $u_0$.

De préférence également, la fonction de coût $K$ comprend une seconde partie représentant la régularisation $Reg$ de la valeur $T_1 ... T_m$ de suite de translations de perturbation dont la minimisation réduit l'amplitude des translations $T_1 ... T_m$. La fonction de régularisation $Reg$ est de préférence une norme quadratique, par exemple donnée par la relation :

$$Reg(T_1 \ldots T_m) = \|T\|_M^2 \equiv T'MT,$$

avec $M$ une matrice symétrique et définie positive, et $T = T_1 \ldots T_m$ s'écrit sous la forme d'un vecteur colonne avec les translations $T_k$ les unes à la suite des autres. Par exemple, $M = I_{3m}$, la matrice identité $3m \times 3m$.

De préférence, la fonction de coût $K$ est donnée par la relation :

$$K(x_0, T_1 \ldots T_m) = \sum_k \sum_{k' \in N_k} \left\| v_{k,k'} - v_{k,k'}(\vec{a}, \tau, T_1 \ldots T_m, x_0) \right\|^2 + \alpha Reg(T_1 \ldots T_m),$$

avec $\alpha \geq 0$ un compromis entre l'écart quadratique entre $v_{k,k'}$ et $v_{k,k'}(u_0, \vec{a}, \tau, T_1 \ldots T_m)$, et la régularisation de $T_1 \ldots T_m$ pour contrôler l'amplitude des translations $T_1 \ldots T_m$.

### Troisième variante pour déterminer l'axe de rotation et la suite de translations de perturbation

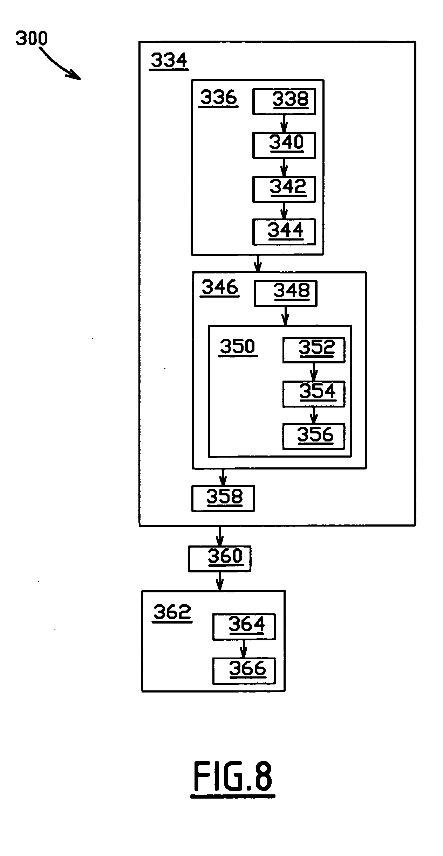

Une troisième variante de l'étape 300 de détermination de l'axe de rotation $L$ et de la suite de translations de perturbation $T_1 \ldots T_m$ est représentée sur la figure 8.

En référence à cette figure 8, l'étape 300 de détermination de l'axe de rotation $L$ et de la suite de translations de perturbation $T_1 \ldots T_m$ comprend une étape 334 de détermination de la direction $\vec{a}$ de l'axe de rotation $L$, au cours de laquelle les translations de perturbation $T_1 \ldots T_m$ sont considérées comme négligeables (ce qui signifie que le mouvement de l'objet $O$ est considéré comme une rotation stable autour de l'axe de rotation $L$),

#### Détermination de la direction de l'axe de rotation

L'étape 334 de détermination de la direction $\vec{a}$ comprend une étape 336 de détermination d'une projection $L_{XY}$ de l'axe de rotation $L$ sur le plan de coupe $P$, à partir des images en coupe $X_0 \ldots X_m$.

#### Détermination d'une projection de l'axe de rotation sur le plan de coupe

La méthode pour déterminer la projection $L_{XY}$ utilise le fait que chaque pixel $s$ et son point symétrique $L_{XY}(s)$ sur le plan de coupe $P$ par rapport à la projection $L_{XY}(s)$, ont des histogrammes $h_s$ et $h_{L_{XY}(s)}$ qui sont proches. Ceci est du au fait que, au cours d'une rotation de l'objet $O$, le pixel $s$ et son point symétrique $L_{XY}(s)$ prennent sensiblement les mêmes valeurs, avec simplement un décalage temporel correspondant au temps que met le point $o$ de l'objet $O$ pour se déplacer du pixel $s$ à son point symétrique $L_{XY}(s)$.

Au cours de l'étape 336, la projection $L_{XY}$ de l'axe de rotation $L$ sur le plan de coupe $P$ est déterminée en choisissant la ligne $l_{XY}$ du plan de coupe $P$ ayant le niveau de symétrie d'histogrammes le plus élevé, c'est-à-dire, telle que les histogrammes $h_s$ et $h_{l_{XY}(s)}$ de chaque pixel $s$ et de son point symétrique $l_{XY}(s)$ soient proches.

Ainsi, l'étape 336 de détermination d'une projection $L_{XY}$ comprend, pour chaque pixel $s$ de la grille $G$, une étape de calcul 338 d'un histogramme $h_s$ des niveaux de gris que prend ce pixel $s$ dans au moins une partie des images en coupe $X_0, \ldots, X_m$. L'histogramme $h_s$ représente le décompte des valeurs du pixel $s$, sans tenir compte de l'ordre dans lequel ces valeurs apparaissent dans la séquence d'images en coupe $X_0, \ldots, X_m$.

De préférence, la partie d'images en coupe correspond aux images en coupe $X_0, \ldots, X_{m'}$ (avec $m' \leq m$) acquises pendant que l'objet $O$ réalise un nombre entier de rotations autour de l'axe de rotation $L$. Cela se traduit par :

$$t_{m'} - t_0 \approx \frac{2\pi r}{|\tau|} \text{ pour un nombre entier } r.$$

L'étape 336 de détermination d'une projection $L_{XY}$ comprend en outre une étape 340 de détermination, pour chaque pixel $s$ de la grille $G$ et pour une ligne $l_{XY}$ du plan de coupe $P$, d'un histogramme $h_{l_{XY}(s)}$ des niveaux de gris que prend le point symétrique $l_{XY}(s)$ de ce pixel $s$ dans la partie précédente des images en coupe.

L'étape 336 de détermination d'une projection $L_{XY}$ comprend en outre une étape 342 de détermination des distances $\Delta(h_s, h_{l_{XY}(s)})$ entre l'histogramme $h_s$ de chaque pixel $s$ et l'histogramme $h_{l_{XY}(s)}$ du point symétrique $l_{XY}(s)$. La

distance $\Delta$ est par exemple la distance de type Kolmogorov-Smirnov: $\Delta(h,h') = \sup_x |\overline{h}(x) - \overline{h}'(x)|$, avec

$$\overline{h}(x) = \sum_{y \leq x} h(y).$$

L'étape 336 de détermination d'une projection $L_{XY}$ comprend en outre une étape 344 de minimisation d'une fonction de coût $\Psi$, qui représente, pour une ligne $l_{XY}$ du plan de coupe $P$, les différences entre l'histogramme $h_s$ de chaque pixel $s$ et l'histogramme $h_{l_{XY}(s)}$ du point symétrique $l_{XY}(s)$ par rapport à la ligne $l_{XY}$. De préférence, la fonction de coût $\Psi$ est donnée par la relation :

$$\Psi(l_{XY}) = \sum_{s \in G} \Delta\big(h_s, h_{l_{XY}(s)}\big).$$

$L_{XY}$ est déterminé comme étant la ligne $l_{XY}$ sur le plan XY qui minimise la fonction de coût $\Psi$.

*Détermination de l'angle entre l'axe de rotation et sa projection*

L'étape 334 de détermination de la direction $\vec{a}$ comprend en outre une étape 346 de détermination de l'angle entre l'axe de rotation $L$ et sa projection $L_{XY}$ sur le plan de coupe $P$. Cet angle entre l'axe de rotation $L$ et sa projection $L_{XY}$ est déterminé en calculant l'angle $\phi$ entre l'axe Z du repère XYZ (perpendiculaire au plan de coupe $P$) et l'axe de rotation $L$.

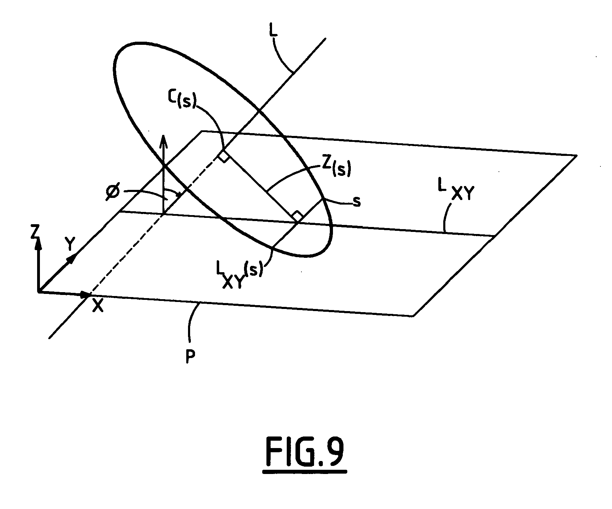

En référence à la figure 9, l'étape 346 de détermination de l'angle $\phi$ utilise le fait que des points $o$ de l'objet $O$ décrivent, au cours du temps, un cercle respectif, centré sensiblement sur l'axe de rotation $L$, ce cercle coupant le plan de coupe $P$, d'une part, en un pixel $s$ et, d'autre part, en son point symétrique $L_{XY}(s)$ par rapport à la projection $L_{XY}$.

De retour à la figure 8, l'étape 346 de détermination de l'angle $\phi$ comprend une étape 348 de détermination, pour chaque pixel $s$ de la grille $G$, d'un temps $t(s)$, dit temps de symétrisation. Le temps de symétrisation $t(s)$ d'un pixel $s$ est le temps nécessaire à un point $o$ de l'objet $O$ pour se déplacer depuis ce pixel $s$ jusqu'au point symétrique $L_{XY}(s)$ par rapport à la projection $L_{XY}$.

Cela se traduit par le fait que la valeur $X_k(s)$ d'un pixel $s$ sur une image en coupe $X_k$ prise à un instant $t_k$ est sensiblement égale à la valeur $X_{k'}(L_{XY}(s))$ du point symétrique $L_{XY}(s)$ sur une image en coupe $X_{k'}$ prise à un instant $t_{k'}$ décalé sensiblement du temps de symétrisation $t(s)$ par rapport à l'instant de prise $t_k$.

Ainsi, le temps de symétrisation $t(s)$ est de préférence déterminé en déterminant le meilleur recalage temporel entre les deux vecteurs $(X_0(s), X_1(s), ..., X_m(s))$ et $(X_0(L_{XY}(s)), X_1(L_{XY}(s)), ..., X_m(L_{XY}(s)))$. Ainsi, le vecteur recalé de temps $\mu$ du vecteur $(X_0(L_{XY}(s)), X_1(L_{XY}(s)), ..., X_m(L_{XY}(s)))$ est défini par $v(\mu) = (X_{q(t_0+\mu)}(L_{XY}(s)), X_{q(t_1+\mu)}(L_{XY}(s)), ..., X_{q(t_{j(\mu)}+\mu)}(L_{XY}(s)))$, avec $j(\mu)$ tel que $j(\mu) + 1$ soit le nombre d'images prises entre l'instant $t_0$ et l'instant $t_m - \mu$, et $q(t)$ tel que l'instant de prise $t_{q(t)}$ soit l'instant le plus proche de l'instant $t$ parmi tous les instants de prise d'images en coupe. De préférence, l'erreur de recalage est donnée par

$$Err(\mu) = \kappa\big((X_0(s), X_1(s), ..., X_{j(\mu)}(s)), \quad v(\mu)\big),$$

avec $\kappa(u,v)$ une mesure de distance entre deux vecteurs $u$ et $v$, $\kappa$ est choisi par exemple comme étant une distance quadratique normalisée : $\kappa(u,v) = \dfrac{1}{l} \sum_i (u_i - v_i)^2$ avec $l$ la longueur des vecteurs. Ainsi $t(s)$ est obtenu en minimisant l'erreur de recalage $Err(\mu)$ :

$$t(s) = \arg \min_{0 \leq \mu < p} Err(\mu),$$

avec $p = 2\pi/|\tau|$ la période de révolution.

L'étape 346 de détermination de l'angle $\phi$ comprend en outre une étape 350 de détermination de l'angle $\phi$ à

partir des temps de symétrisation $t(s)$.

L'étape 350 de détermination de l'angle $\phi$ à partir des temps de symétrisation $t(s)$ comprend une étape 352 de détermination d'une direction $\vec{b}$ de la projection $L_{XY}$, avec $\|\vec{b}\| = 1$, ainsi que d'un point de passage $y_0$ de la projection $L_{XY}$. La projection $L_{XY}$ est déterminée par sa direction et le point de passage $(y_0, \vec{b})$. La direction $\vec{b}$ de la projection $L_{XY}$ est choisie comme étant, à une constante positive multicative près, la projection sur le plan XY de la direction de l'axe de rotation $\vec{a}$ que l'on détermine par la suite :

$$\vec{b} = \pi_{XY}(\vec{a}) / \|\pi_{XY}(\vec{a})\|,$$

avec $\pi_{XY} = \begin{bmatrix} 1 & 0 & 0 \\ 0 & 1 & 0 \\ 0 & 0 & 0 \end{bmatrix}$ la matrice de projection sur le plan XY. Ainsi on suppose que le sens de rotation de l'objet

$O$ par rapport à la direction de l'axe de rotation $\vec{a}$ qui est déterminé par la suite, est connu (ou supposé), par exemple selon le réglage du système de l'imagerie 10, une fois la direction $\vec{b}$ choisie (telle que $\vec{b} = \pi_{XY}(\vec{a})/\|\pi_{XY}(\vec{a})\|$). Ainsi on détermine la vitesse angulaire $\tau$ de rotation :

$$\tau = \begin{cases} |\tau| & \textit{pour des rotations positives} \\ -|\tau| & \textit{pour des rotations négatives} \end{cases}.$$

Si le sens de rotation de l'objet est inconnu, il est choisi arbitrairement : dans ce cas, la représentation tridimensionnelle $V$ de l'objet $O$ sera au pire la représentation tridimensionnelle $V$ du miroir de l'objet $O$.

L'étape 350 de détermination de l'angle $\phi$ à partir des temps de symétrisation $t(s)$ comprend en outre une étape 354 de détermination, pour chaque pixel $s$, d'une distance $z(s)$ entre, d'une part, le milieu $\dfrac{s + L_{XY}(s)}{2}$ du segment entre le pixel $s$ et son symétrique $L_{XY}(s)$ par rapport à la projection $L_{XY}$, et, d'autre part, le centre $c(s)$ du cercle autour duquel tourne un point $o$ de l'objet $O$ passant par le pixel $s$. Cette distance est positive si le centre $c(s)$ est au dessus du plan $XY$, elle est nulle si $c(s)$ est dans le plan XY, et négative sinon.

De préférence, la distance $z(s)$ est donnée par la relation :

$$z(s) = d(s) \frac{\| s - L_{XY}(s) \|}{2 \tan\left(\dfrac{t(s)\tau}{2}\right)},$$

avec $t(s)\tau$ l'angle de l'arc du cercle depuis $s$ jusqu'au point symétrique $L_{XY}(s)$ suivant le sens de rotation,

$d(s) = \begin{cases} 1 & si\ s \in P^R \\ -1 & si\ s \in P^L \end{cases}$, $P^R$ et $P^L$ étant les deux demi-plans du plan de coupe $P$ séparés par la projection $L_{XY}$, $P^R$

et $P^L$ sont définis par :

$$P^L = \{s \in P : <\vec{b} \wedge (s - y_0), \vec{e}_3> \geq 0\}$$

$$P^R \;=\; \{s \in P : <\vec{b} \wedge (s - y_0), \vec{e}_3> \;<\; 0\},$$

avec $\wedge$ le produit vectoriel, $<.,.>$ le produit scalaire , et $\vec{e}_3 = \begin{bmatrix} 0 \\ 0 \\ 1 \end{bmatrix}$ la direction de l'axe Z du repère. $P^R$ et $P^L$ ne dépendent pas de la position de $y_0$ sur la projection $L_{XY}$.

En théorie, il y a une relation affine entre la distance $z(s)$ et la position sur projection $L_{XY}$ de l'axe de rotation,

du point $\dfrac{s + L_{XY}(s)}{2}$ (qui est aussi la projection de $s$ sur la projection $L_{XY}$ de l'axe de rotation) par rapport au point $y_0$ :

$$z(s) = <s - y_0, \vec{b}> \cos\phi + z_0,$$

avec $z_0 \geq 0$ si la projection du point $y_0$ sur l'axe de rotation $L$ est au dessus du plan XY ou dans le plan XY et $z_0 < 0$ sinon, et $|z_0|$ est la distance entre $y_0$ et l'axe de rotation $L$.

Ainsi, de préférence, l'étape 350 de détermination de l'angle $\phi$ à partir des temps de symétrisation $t(s)$ comprend en outre une étape 356 de détermination de l'angle $\phi$ par la régression de la relation affine précédente :

$$(\phi, z_0) = \arg\min_{\hat{\phi}, \hat{z}_0} \sum_{s \in G_{\delta, \sigma_{min}}} \left( z(s) - <s - \hat{y}_0, \vec{b}> \cos\hat{\phi} - \hat{z}_0 \right)^2,$$

avec $G_{\delta, \sigma_{min}}$ l'ensemble des pixels $s$ de la grille $G$ dont la distance par rapport à la projection $L_{XY}$ de l'axe de rotation dépasse un certain seuil $\delta$ et tel que la variance empirique des niveaux de gris que prend le pixel $s$ dans la séquence d'images en coupe $X_0, ..., X_m$ dépasse un certain seuil $\sigma^2_{min}$.

En pratique, $\delta$ est choisi entre 4 et 20 pixels, $\sigma^2_{min}$ est par exemple le $q$-quantile des variances empiriques des niveaux de gris, calculées pour chaque pixel $s$ de la grille $G$, que prend le pixel $s$ dans la séquence d'images en coupe $X_0, ..., X_m$ (ce qui signifie que la proportion des pixels $s$ de la grille $G$, où la variance empirique calculée des niveaux de gris est inférieure ou égale à $\sigma^2_{min}$, est sensiblement égale à $q$), $q$ vaut entre 60% et 95% en général.

Le fait de limiter la régression précédente aux pixels dans $G_{\delta, \sigma_{min}}$ permet d'améliorer la robustesse de l'estimation en n'utilisant que les temps de symétrisation pour les pixels dans $G_{\delta, \sigma_{min}}$ qui sont en général plus fiables.

L'étape 334 de détermination de la direction $\vec{a}$ comprend en outre une étape 358 de détermination de la direction $\vec{a}$, à partir de la projection $L_{XY}$ et de l'angle $\phi$. La direction $\vec{a}$ de l'axe de rotation $L$ est par exemple donnée par le vecteur de coordonnées sphériques $(1, \theta, \phi)$, avec $\theta$ l'angle entre l'axe X et la direction $\vec{b}$ de la projection $L_{XY}$, tel que $\vec{b} = \pi_{XY}(\vec{a}) / \|\pi_{XY}(\vec{a})\|$.

*Détermination optionnelle du point de passage de l'axe de rotation*

En complément optionnel, l'étape 300 de détermination de l'axe de rotation $L$ et de la suite de translations de perturbation $T_1 ... T_m$ comprend en outre une étape 360 de détermination d'un point de passage $u_0$ de l'axe de rotation $L$, à partir du ou des temps de symétrisation $t(s)$. De préférence, le point de passage $u_0$ choisi comme étant le point d'intersection entre l'axe de rotation $L$ et la droite perpendiculaire au plan XY et passant par le point $y_0$. Le point de passage $u_0$ est dans ce cas donné par la relation suivante :

$$u_0 = y_0 + \frac{z_0}{\sin \phi} \vec{e}_3 \,,$$

*Détermination de la suite de translations de perturbation*

L'étape 300 de détermination de l'axe de rotation $L$ et de la suite de translations de perturbation $T_1 \dots T_m$ comprend en outre une étape 362 de détermination de la suite de translations de perturbation $T_1 \dots T_m$, réalisée de la même manière qu'à l'étape 330.

Plus précisément, l'étape 362 de détermination de la suite de translations de perturbation $T_1 \dots T_m$ comprend une étape 364 de détermination, de la même manière qu'à l'étape 324, des vecteurs de translation de référence $v_{k,k'}$ des transformations affines $F_{k,k'}$, dont les valeurs minimisent la fonction de coût $U$, avec la direction $\vec{a}$ de l'axe de rotation $L$ et la vitesse angulaire $\tau$ connues.

Grâce à la connaissance de la direction $\vec{a}$ de l'axe de rotation, la minimisation de $U$ est largement simplifiée, en minimisant indépendamment chaque terme $\chi(A_{ff}(Q_{k,k'}(\vec{a}, \tau), v_{kk'}, X_k), X_{k'})$ pour déterminer individuellement chaque vecteur de translation de référence $v_{k,k'}$.

L'étape 362 de détermination de la suite de translations de perturbation $T_{1 \dots} T_m$ comprend en outre une étape 366 de détermination de la suite de translations de perturbation $T_1 \dots T_m$ et du point de passage $u_0$ ayant les valeurs qui minimisent la fonction de coût $K$ de l'étape 332, connaissant les vecteurs de translation de référence $v_{k,k'}$.

En variante, lorsque l'étape optionnelle 360 est réalisée, la minimisation de la fonction de coût $K$ est simplifiée en utilisant le point de passage $u_0$ déterminé à cette étape. Par ailleurs, l'étape 366 revient à déterminer la suite de translations de perturbation $T_1 \dots T_m$ ayant la valeur qui minimise la fonction de coût $K$, le point de passage $u_0$ étant connu.

**Détermination d'une représentation tridimensionnelle de l'objet**

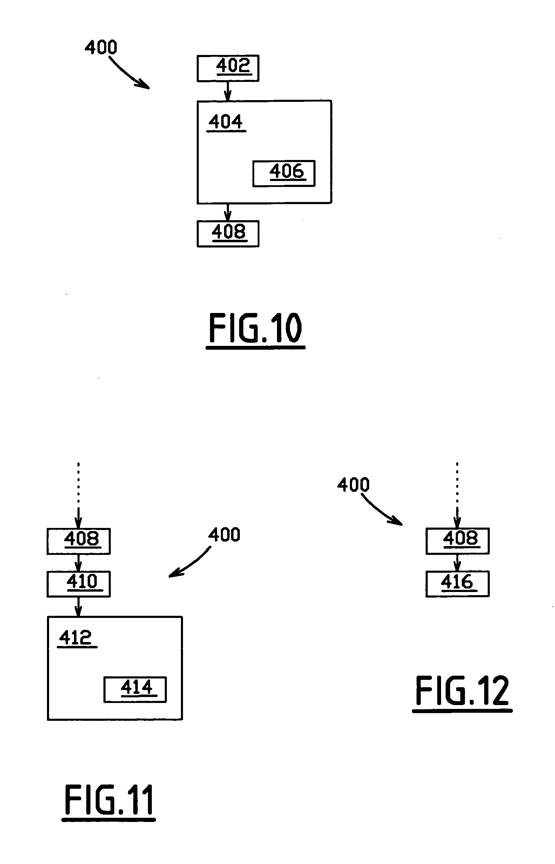

En référence à la figure 10, l'étape 400 de détermination de la représentation tridimensionnelle $V$ de l'objet $O$ comprend une étape 402 de détermination d'un volume $D$, inclus dans le volume $U$ de la chambre 20, sur lequel sera « reconstruit » l'objet $O$. Le volume $D$ comprend l'objet $O$ (au moins en partie) et son environnement proche. Par exemple, le volume $D$ est un parallélépipède.

L'étape 400 de détermination de la représentation tridimensionnelle $V$ de l'objet $O$ comprend en outre une étape 404 de détermination d'un ensemble $\Omega$ de points $u$ du volume $D$ et d'une valeur $X(u)$ de chacun de ces points $u$ à un instant de référence. Dans la suite, l'instant initial $t_0$ sera choisi comme instant de référence. L'ensemble $\Omega$ de points $u$ comprend en particulier des points $o$ de l'objet $O$ dans sa position $O_0$ à l'instant initial $t_0$.

On remarquera que, dans une implémentation très simple, l'ensemble $\Omega$ de points $u$ forme déjà une représentation tridimensionnelle de l'objet, cette dernière étant donnée par la constellation des points de l'ensemble $\Omega$.

L'étape 404 de détermination de l'ensemble de points $\Omega$ est réalisée à partir des positions de l'objet $O$ par rapport au plan de coupe $P$ à chaque instant de prise de vue $t_0 \dots t_m$, et de la séquence d'images en coupe $X_0 \dots X_m$.

Plus précisément, l'étape 404 de détermination de l'ensemble de points $\Omega$ comprend une étape 406 de calcul, pour chaque image en coupe $X_k$, de la position $C_k(s)$ de chaque pixel $s$ de l'image en coupe $X_k$ à l'instant initial $t_0$, en supposant que ce pixel appartient à l'objet $O$. Le calcul est réalisé à partir des paramètres du mouvement de l'objet $O$ (vitesse angulaire $\tau$, axe de rotation $L$, suite de translations de perturbation $T_1 \dots T_m$) déterminés précédemment. La position $C_k(s)$ de chaque point $u$ de l'ensemble $\Omega$ est donné d'un pixel $s$ d'origine respectif d'une image $X_k$, par :

$$C_k(s) = R^t_{\vec{a},\tau(t_k-t_0)}(\pi_3 s - u_0 - \overline{T}_k) + u_0$$

avec $\overline{T}_k = R_{\vec{a},\tau(t_k-t_1)} T_1 + R_{\vec{a},\tau(t_k-t_2)} T_2 + \cdots + R_{\vec{a},\tau(t_k-t_{k-1})} T_{k-1} + T_k$ , avec $\overline{T}_0 = 0$ , est la matrice transposée de

$R_{\vec{a},\tau(t_k-t_0)}$. L'ensemble $\Omega$ est constitué des points $u$ du volume $D$ de position $C_k(s)$ pour chaque pixel $s$ et chaque image en coupe $X_k$. On dit ainsi que $s$ et $X_k$ sont respectivement le pixel et l'image d'origine du point $u$. On remarque que $C_k(s)$ est aussi la position dans le repère de l'objet $O$ choisi du pixel $s$ du plan de coupe à l'instant de prise $t_k$ de l'image en coupe $X_k$.

Chacun des points $u$ de l'ensemble $\Omega$ est associé à la valeur $X_k(s)$ du pixel $s$ d'origine de l'image en coupe d'origine $X_k$ : $X(u) = X_k(s)$.

On remarquera que l'ensemble $\Omega$ peut ainsi comprendre plusieurs fois un même point $u$, chaque fois associé avec une valeur respective, ces différentes valeurs provenant de différentes images en coupe.

L'étape 400 de détermination de la représentation tridimensionnelle $V$ de l'objet $O$ comprend en outre une étape 408 de choix d'une fonction de représentation tridimensionnelle $V_\beta$ paramétrable avec des paramètres $\beta$ , et d'une opération Op donnant, à partir de la fonction de représentation tridimensionnelle $V_\beta$, une fonction d'estimation $\tilde{X} = Op$ ($V_\beta$) de la valeur de chaque point $u$ de l'ensemble $\Omega$.

Une fois les paramètres $\beta$ déterminés, la représentation tridimensionnelle $V$ est donnée par la fonction de représentation tridimensionnelle $V_\beta$, de préférence en tout point du volume $D$.

*Première variante de fonction de représentation tridimensionnelle $V_\beta$* En référence à la figure 11, dans une première variante, la fonction de représentation tridimensionnelle $V_\beta$, choisie au cours de l'étape 408, est une décomposition en fonctions B-spline de degré $r$ avec des noeuds $w$ espacés de manière égale dans l'espace :

$$w = b + (a_1 k_1, a_2 k_2, a_3 k_3),$$

avec $b \in R^3$, et $a_1$, $a_2$ et $a_3$ respectivement le pas d'échantillonnage dans les directions X, Y, et Z, et $k_1, k_2, k_3$ des nombres entiers. Chaque paramètre de la fonction de représentation tridimensionnelle $V_\beta$ est associé à un noeud respectif.

La fonction de représentation tridimensionnelle $V_\beta$ s'écrit alors :

$$\forall u = (u_1, u_2, u_3) \in D ,$$

$$V(u) = \sum_{w=(w_1, w_2, w_3) \in W} \eta(\frac{u_1 - w_1}{a_1})\eta(\frac{u_2 - w_2}{a_2})\eta(\frac{u_3 - w_3}{a_3})\beta(w),$$

avec $\eta$ la fonction B-spline centrale de degrés $r$ définie sur l'ensemble des nombres réels $R$ , $W$ l'ensemble des noeuds dans le volume $D$. $\eta$ est par exemple la fonction indicatrice sur l'intervalle $[-\frac{1}{2}, \frac{1}{2}]$ , convoluée $r$ fois avec elle-même :

$$\eta(x) = 1_{[-\frac{1}{2}, \frac{1}{2}]} * 1_{[-\frac{1}{2}, \frac{1}{2}]} * \ldots * 1_{[-\frac{1}{2}, \frac{1}{2}]}(x).$$
$$\underbrace{\qquad\qquad\qquad\qquad\qquad\qquad}_{r+1 \; fois}$$

En particulier, si $r = 3$ (fonction B-spline cubique) :

$$\eta(x) = \begin{cases} \dfrac{2}{3} - x^2 + \dfrac{|x|^3}{2}, & if \; 0 \leq |x| < 1 \\[2mm] \dfrac{(2 - |x|)^3}{6}, & if \; 1 \leq |x| < 2. \\[2mm] 0, & if \; |x| \geq 2 \end{cases}$$

Dans cette première variante, l'opération Op est choisie comme la fonction identité, de sorte que la fonction d'estimation $\tilde{X}$ de la valeur de chaque point $u$ de l'ensemble $\Omega$ est égale à la fonction de représentation tridimensionnelle $V_\beta$ : $\tilde{X}(u) = V_\beta(u)$.

Avec ce choix de fonction de représentation tridimensionnelle $V_\beta$, l'étape 400 de détermination de la représentation tridimensionnelle $V$ de l'objet $O$ comprend en outre une étape 410 de division du volume $D$ en une pluralité de sous volumes $D_i$, disjoints les uns des autres. En variante, les bords des sous volumes $D_i$ se chevauchent. De cette manière, les noeuds $w$ sont également divisés en groupes $\{w\}_i$ chacun associé à un sous volume $D_i$ respectif. De même, les points de l'ensemble $\Omega$ sont divisés en groupes $\Omega_i$ chacun associé à un sous volume $D_i$ respectif.

Plus précisément, chaque groupe $\{w\}_i$ comprend les noeuds situés dans le sous volume respectif $D_i$ et les paramètre $\{\beta\}_i$ de ces noeuds $\{w\}_i$ sont ainsi associés au sous volume $D_i$. De même, les points de chaque groupe $\Omega_i$, sont les points de l'ensemble $\Omega$ situés dans le sous volume $D_i$.

L'étape 400 de détermination de la représentation tridimensionnelle $V$ de l'objet $O$ comprend en outre une étape 412 de détermination des paramètres $\beta$, tels que, pour chaque point $u$ de l'ensemble $\Omega$, l'estimation $\tilde{X}(u)$ de la valeur du point $u$ donne sensiblement la valeur $X(u)$ du point $u$.

Plus précisément, l'étape 412 de détermination des paramètres $\beta$ comprend, pour chaque sous volume $D_i$, une étape 414 de détermination des paramètres $\{\beta\}_i$ associés à ce sous volume $D_i$, tels que, pour chaque point $u$ du groupe $\Omega_i$ et des groupes directement contiguës au groupe $\Omega_i$, l'estimation $\tilde{X}(u)$ de la valeur du point $u$ donne sensiblement la valeur $X(u)$ du point $u$, les paramètres $\{\beta_{j\neq i}\}$ associés aux autres sous-ensemble $D_{j\neq i}$ étant fixés à une valeur donnée.

L'étape 414 de détermination des paramètres $\{\beta\}_i$ est mise en oeuvre plusieurs fois, de manière itérative, en balayant à chaque fois tous les sous volumes $D_i$ : au cours de la première itération, on détermine successivement chaque groupe de paramètres $\{\beta\}_i$ (pour la détermination d'un groupe de paramètre $\{\beta\}_i$, la valeur donnée de chacun des autres groupes de paramètre $\{\beta\}_{j\neq i}$ est fixée à une valeur prédéterminée, par exemple nulle) ; au cours des itérations ultérieures, on détermine successivement chaque groupe de paramètres $\{\beta\}_i$ (pour la détermination d'un groupe de paramètre $\{\beta\}_i$, la valeur donnée de chacun des autres groupes de paramètre $\{\beta\}_{j\neq i}$ est le dernier résultat déterminé auparavant).

De préférence, les paramètres $\{\beta\}_i$ sont déterminés en minimisant la fonction de coût suivante :

$$U(\beta) = \sum_{u \in \Omega} (\tilde{X}(u) - X(u))^2 + \lambda \beta^t A \beta,$$

$A$ est une matrice symétrique définie positive, ou de manière plus générale semi définie positive, $\beta^t A \beta$ est une mesure de l'irrégularité quadratique, et $\lambda > 0$ est un compromis entre l'adéquation de la fonction de représentation tridimensionnelle et la régularité.

*Seconde variante de fonction de représentation tridimensionnelle $V_\beta$*

En référence à la figure 12, la fonction de représentation tridimensionnelle $V_\beta$, choisie au cours de l'étape 408, s'écrit sous la forme d'une décomposition en fonctions radiales de base (« Radial Basis Function » ou RBF) $\phi$ avec les noeuds $w$ :

$$\forall u \in D, V_\beta(u) = \sum_{w \in W} \phi(u - w)\beta(w),$$

avec $W$ l'ensemble des noeuds dans le volume $D$.

La fonction $\phi(u\text{-}w)$ dépend de la distance entre le point $u$ et le noeud $w$, mais pas de la direction entre le point $u$ et le noeud $w$. Par exemple, $\phi(x) = \exp(-c\|x\|^2)$ ou $\phi(x) = \eta(\|x\|)$ avec $\eta$ la fonction B-spline centrale cubique.

En outre, l'opération $Op$ donne une fonction d'estimation $\tilde{X} = Op(V_\beta, f_R)$ de la valeur de chaque point $u$ de l'ensemble $\Omega$ à partir de la fonction de représentation tridimensionnelle $V_\beta$ et d'une fonction d'étalement du point $f_R$. Dans l'exemple décrit, l'opération $Op$ est une convolution de la fonction de représentation tridimensionnelle $V_\beta$ avec la fonction d'étalement du point $f_R$ suivante : $f_R(u) = f(Ru)$, avec $f$ la fonction d'étalement du point sans rotation, qui est connue (par exemple, donnée par le constructeur du système d'imagerie, ou déterminée expérimentalement), $f_R$ la fonction d'étalement du point pour la rotation $R$, et $Ru$ le point résultant de la rotation du point $u$ par la rotation $R$.

La fonction d'étalement du point $f_R$ dépend de la rotation $R$ entre la position de l'objet $O$ à l'instant $t_k$ de prise de l'image en coupe $X_k$ respective associée au point $u$, et la position de l'objet $O$ à l'instant de référence $t_0$ :

$R = R_{\tilde{a}, \tau(t_k - t_0)}$. Ainsi, pour chaque point $u$ de l'ensemble $\Omega$,

$$\tilde{X}(u) = Op(V_\beta, f_R)(u) = (V_\beta * f_R)(C_k(s)),$$

avec * l'opération de convolution, le pixel $s$ et l'image en coupe $X_k$ (de l'instant de prise $t_k$) étant respectivement le pixel et l'image d'origine du point $u$.

Du fait du choix de fonctions radiales de base $\phi$, on obtient la propriété que, pour chaque point $u$ du volume $D$ :

$$Op(\phi, f_R)(u) = Op(\phi, f)(Ru),$$

soit :

$$(\phi * f_R)(u) = (\phi * f)(Ru)$$

avec * l'opération de convolution, $R$ une rotation quelconque.

Ainsi, L'étape 400 de détermination de la représentation tridimensionnelle $V$ de l'objet $O$ comprend en outre une étape 416 de détermination des paramètres $\beta$ de la fonction de représentation tridimensionnelle $V_\beta$ en minimisant la fonction de coût suivante :

$$E(\beta) = \sum_{u \in \Omega}\left( X(u) - \sum_{w \in W}(\phi * f)(\pi_3 s - \varsigma_i - R_i w)\beta(w) \right)^2 + \lambda\beta' A\beta,$$

où $s$ et l'image en coupe $X_i$ (de l'instant de prise $t_i$) sont respectivement le pixel et l'image d'origine du point $u$,

$R_i = R_{\bar{a},\tau(t_i - t_0)}$ et

$$\varsigma_i = \overline{T}_i + u_0 - R_{\bar{a},\tau(t_i - t_0)}u_0.$$

De façon avantageuse, cette minimisation est réalisée en calculant une unique convolution (la convolution $\phi*f$) et en résolvant le système linéaire, qui découle du calcul de la convolution $\phi*f$, sur les paramètres $\beta$. Les paramètres $\beta$ sont ainsi déterminés facilement.

**Variante de détermination de l'ensemble $\Omega$**

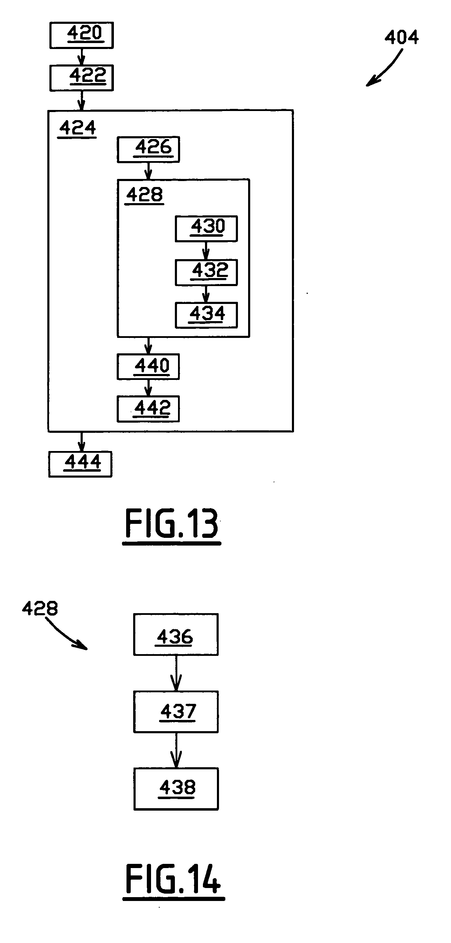

La figure 13 illustre une variante de réalisation de l'étape 404 de détermination d'un ensemble $\Omega$ de points $u$ du volume $D$ et d'une valeur $X(u)$ de chacun de ces points $u$ à un instant de référence, afin de déterminer l'ensemble de points $\Omega$ à partir de plusieurs séquences d'images en coupe, notées $S_l$ avec $l=1...I$. Chaque séquence $S_l$ est composée

des images en coupes $X_0^l, X_1^l, ..., X_{m_l}^l$, à des instants de prises de vue , $t_0^l, t_1^l, ..., t_{m_l}^l$ respectifs.

Dans cette variante, l'étape 404 de détermination de l'ensemble de points $\Omega$ comprend une étape 420 de détermination d'une fonction de représentation tridimensionnelle $V_l$, sur un sous volume respectif $D_l$, pour chaque séquence $S_l$. Cette étape 420 est par exemple mise en oeuvre suivant les étapes 408 à 416 précédentes pour chaque séquence $S_l$.

Chaque fonction de représentation tridimensionnelle $V_l$ donne une représentation de l'objet $O$ dans une position respective, notée $O_l$.

L'étape 404 de détermination de l'ensemble de points $\Omega$ comprend en outre une étape 422 de discrétisation de chaque sous volume $D_l$ suivant une grille tridimensionnelle $G_3$. On obtient ainsi, pour chaque séquence $S_l$, un sous volume discrétisé $\tilde{D}_l$, regroupant les points du sous volume $D_l$ situés sur la grille tridimensionnelle $G_3$. On obtient ainsi :

$\forall u \in \tilde{D}_l$, $\tilde{V}_l(u) = V_l(u)$.

De préférence, la grille tridimensionnelle $G_3$ a un pas qui est inférieur ou égal à celui de la grille $G$ du plan de coupe $P$.

L'étape 404 de détermination de l'ensemble de points $\Omega$ comprend en outre une étape 424 de détermination, pour chaque séquence $S_l$, d'une rotation $Q_l$ et d'une translation $h_l$ permettant de sensiblement placer toutes les positions $O_l$ des représentations de l'objet $O$ dans une même position de référence.

De préférence, la position de référence est celle d'une des séquences $S_l$. Dans la suite, la position $O_l$ de l'objet de la première séquence $S_l$ sera la position de référence. Ainsi, un point $\bar{o}$ de l'objet $O$ de la position $u$ dans $O_1$ est à la position $Q_l u + h_l$ dans $O_l$, avec $l \neq 1$.

L'étape 424 de détermination, pour chaque séquence $S_l$, d'une rotation $Q_l$ et d'une translation $h_l$ comprend une étape 426 de détermination d'un niveau de quantile $q$, tel que sensiblement les points lumineux de l'objet $O$ aient des valeurs $\tilde{V}_l(u)$ supérieures ou égales au $q$-quantile $\rho_l(q)$, pour chaque sous ensemble discrétisé $\tilde{D}_l$. Par exemple, le niveau de quantile $q$ est pris entre 60% et 95%.

L'étape 424 de détermination, pour chaque séquence $S_l$, d'une rotation $Q_l$ et d'une translation $h_l$ comprend en outre une étape 428 de sélection d'au moins trois groupes $g_1 ... g_k$, de préférence quatre ou plus, de points du sous ensemble discrétisé $\tilde{D}_l$, selon un critère de sélection. Le critère de sélection est le même pour toutes les séquences $S_l$. Le critère de sélection s'applique en particulier sur la valeur des points du sous ensemble discrétisé $\tilde{D}_l$.

En appliquant ainsi le même critère de sélection pour toutes les séquences $S_l$, il est possible d'obtenir sensiblement les mêmes points de l'objet $O$ pour toutes les séquences $S_l$, même si ces points n'ont pas la même position pour les différentes séquences $S_l$.

Dans une première variante représentée sur la figure 13, l'étape 428 de sélection des groupes $g_1 ... g_k$, comprend une étape 430 de sélection d'un même nombre $n$ des points les plus lumineux (ayant les valeurs les plus élevées). De préférence, le nombre $n$ est l'entier le plus proche de $\min(qn_1,..., qn_l)$ ($q$ est exprimé en tant que pourcentage), avec $n_1,..., n_1$ les nombres de points dans les sous ensemble discrétisés $\tilde{D}_1...\tilde{D}_l$.

L'étape 428 de sélection des groupes $g_1 ... g_k$ comprend en outre une étape 432 de classement, pour chaque séquence $S_l$, des $n$ points les plus lumineux (sélectionnés précédemment) suivant leur valeur, dans l'ordre décroissant par exemple.

L'étape 428 de sélection des groupes $g_1 ... g_k$ comprend en outre une étape 434 de division des $n$ points les plus lumineux classés en $k$ groupes $g_1 ... g_k$ de taille sensiblement égale : les points du groupe $g_1$ sont plus lumineux que ceux du groupe $g_2$, qui sont plus lumineux que ceux de $g_3$, etc.

Dans une seconde variante représentée sur la figure 14, l'étape 428 de sélection des groupes $g_1...g_k$, comprend une étape de calcul 436, pour chaque séquence $S_l$, du barycentre $b_l$ des points $u$ du sous ensemble $\tilde{D}_l$, dont les valeurs sont supérieures au $q$-quantile $\rho_l(q)$. L'ensemble de ces points sera noté par la suite $\tilde{D}_{l,q}$. Pour le calcul du barycentre $b_l$, tous les points ont la même pondération.

L'étape 428 de sélection des groupes $g_1 ... g_k$, comprend en outre une étape 437 de détermination de la distance la plus élevée entre le barycentre et les points de tous les ensembles $\tilde{D}_{l,q}$. Cette distance sera appelée par la suite rayon $r$.

De préférence, le rayon $r$ est donné par :

$$ r = \min\left(\max\{\|u - b_1\| \ : \ u \in \tilde{D}_{1,q}\}, ..., \max\{\|u - b_I\| \ : \ u \in \tilde{D}_{I,q}\}\right) $$

L'étape 428 de sélection des groupes $g_1...g_k$, comprend en outre une étape 438 de division du rayon $r$ (c'est-à-dire du segment $[0,r]$) en $k$ segments de tailles égales ($seg_i = [(k-i)r/k, (k-i+1)r/k]$, avec $1 \leq i \leq k$), chaque groupe $g_1 ... g_k$ étant associé à un segment respectif.

Plus précisément, pour chaque séquence $S_l$, chaque groupe $g_i$ comprend les points $u$ de $\tilde{D}_{l,q}$ dont la distance au barycentre $b_l$ est comprise dans le segment $seg_i$ associé.

De retour à la figure 13, l'étape 424 de détermination, pour chaque séquence $S_l$, d'une rotation $Q_l$ et d'une translation $h_l$ comprend en outre une étape 440 de détermination, pour chaque séquence $S_l$, du barycentre $\omega_{l,i}$ des points $u$ de chacun des groupes $g_i$. Pour le calcul des barycentres $\omega_{l,i}$, les points ont des pondérations identiques.

L'étape 424 de détermination, pour chaque séquence $S_l$, d'une rotation $Q_l$ et d'une translation $h_l$ comprend en outre une étape 442 de détermination de la rotation $Q_l$ et de la translation $h_l$ à partir des barycentres $\omega_{l,i}$.

De préférence, les rotations $Q_l$ et les translations $h_l$ sont déterminées par la minimisation d'une fonction de coût :

$$ (Q_l, h_l) = \arg \min_{Q \in O(3), h \in \mathbf{R}^3} \sum_{i=1}^{k} \| Q\omega_{1,i} + h - \omega_{l,i} \|^2, $$

avec $O(3)$ l'ensemble des matrices orthogonales 3-par-3.

De préférence, la solution de la minimisation précédente est obtenue en calculant :

$$\begin{cases} Q_l = P_l P_1' \\ h_l = \overline{\omega}_l - Q_l \overline{\omega}_1 \end{cases}.$$

avec $\overline{\omega}_1 = \dfrac{1}{k}\sum_{i=1}^{k}\omega_{1,i}$ et $\overline{\omega}_l = \dfrac{1}{k}\sum_{i=1}^{k}\omega_{l,i}$ , et $P_1$ et $P_l$ obtenues par décomposition de valeurs singulières ("singular value decomposition" ou SVD) de la matrice $M = \sum_{i=1}^{k}(\omega_{1,i} - \overline{\omega}_1)(\omega_{l,i} - \overline{\omega}_l)'$ , , c'est-à-dire $M = P_1 \Lambda P_l'$ avec $P_1$ et $P_l$ des matrices orthogonales 3-par-3, et $\Lambda$ une matrice diagonale avec des nombres non négatifs sur la diagonale.

. L'étape 404 de détermination de l'ensemble de points $\Omega$, comprend en outre une étape 444 de détermination des points $u$ de $\Omega$ et d'une valeur $X(u)$ de chacun de ces points $u$, à partir des séquences d'images en coupe $S_l$ avec $l$ = 1...$I$, les matrices de rotation $Q_l$ et les translations $h_l$ étant connues : l'ensemble $\Omega$ est constitué des points $u$ du volume $D$ de position

$$Q_l' R_{\vec{a}_l, \tau_l(t_k^l - t_0^l)}^t \left(\pi_3 s - u_0^l - \overline{T}_k^l\right) + Q_l'\left(u_0^l - h_l\right),$$

pour chaque pixel $s$ de chaque image en coupe $X_k^l$ de chaque séquence $S_l$, avec $\tau_l$, $\vec{a}_l$, $u_0^l$ et $T_k^l$ qui sont respectivement les paramètres du mouvement pour la séquence $S_l$, $Q_1 = I_3$ la matrice identité 3-par-3, $h_l = 0$,

$\overline{T}_k^l = R_{\vec{a}_l, \tau_l(t_k^l - t_1^l)}T_1^l + R_{\vec{a}_l, \tau_l(t_k^l - t_2^l)}T_2^l + \cdots + R_{\vec{a}_l, \tau_l(t_k^l - t_{k-1}^l)}T_{k-1}^l + T_k^l$ et $\overline{T}_0^l = 0$ . On dit ainsi que $s$, $X_k^l$ et $S_l$ sont respectivement le pixel, l'image et la séquence d'origine du point $u$.

Chacun des points $u$ de l'ensemble $\Omega$ est associé à la valeur $X_k^l(s)$ du pixel $s$ de l'image en coupe $X_k^l$ de la séquence $S_l$ : $X(u)$ avec $s$, $X_k^l$ et $S_l$ étant respectivement le pixel, l'image et la séquence d'origine du point $u$

### Prise en compte de la durée d'acquisition

Au cours de la prise des images en coupe, l'objet $O$ se déplace pendant le temps d'exposition pour créer une image sur le plan focal. Ceci engendre un flou de mouvement supplémentaire non négligeable (en plus du flou défini par la fonction d'étalement du point).

Ce flou de mouvement est, dans un mode de réalisation de l'invention, pris en compte dans l'étape 400 de la représentation tridimensionnelle $V$ de l'objet $O$, de préférence lorsque le temps d'exposition est relativement long par rapport au temps nécessaire pour passer d'une image en coupe $X_k$ à l'image en coupe suivante $X_{k+1}$.

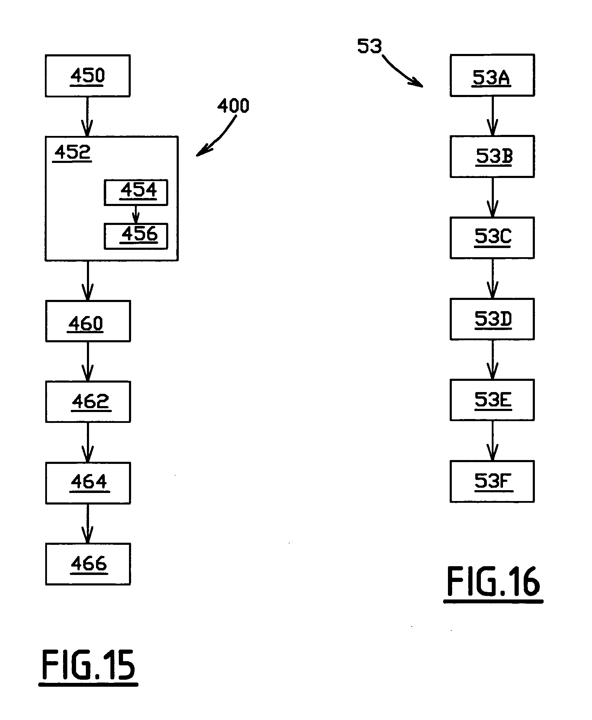

Ainsi, en référence à la figure 15, dans une troisième variante, l'étape 400 de détermination de la représentation tridimensionnelle $V$ de l'objet $O$ comprend une étape 450 de détermination d'un intervalle d'acquisition $I_k = [t_k + \delta_0; t_k + \delta_0 + \delta]$ de chaque image en coupe $X_k$, défini par un instant de début d'acquisition $t_k + \delta_0$ et un instant de fin d'acquisition $t_k + \delta_0 + \delta$, la différence donnant la durée d'acquisition $\delta$. On suppose, pour $0 \le k < m$: $t_k \le t_k + \delta_0 < t_k + \delta_0 + \delta \le t_{k+1}$.

Dans l'exemple décrit, l'instant de début d'acquisition $\delta_0$ et la durée d'acquisition $\delta$ sont les mêmes pour toutes les images en coupe. Néanmoins, la méthode s'étend facilement au cas où l'instant de début d'acquisition $\delta_0$ et la durée d'acquisition $\delta$ varient selon les images en coupe.

Durant l'exposition, le niveau de luminosité de chaque point du plan focal évolue progressivement en additionnant le niveau de luminosité des points du parcours qu'il traverse.

La position de l'objet $O$ à chaque instant $t_k$ étant connue (ou estimée), l'étape 400 de la représentation tridimensionnelle $V$ de l'objet $O$ comprend en outre une étape 452 de détermination de la position continue de l'objet $O$, en fonction du temps, entre les instants successifs $t_k$ et $t_{k+1}$, et plus particulièrement pendant les intervalles d'acquisition $I_k$.

Ainsi, l'étape 452 de détermination de la position continue de l'objet $O$ comprend une étape 454 de détermination d'une relation entre la position $\psi_{k,t}(u)$ à l'instant $t_k + t$ (entre les instants successifs $t_k$ et $t_{k+1}$) d'un point de l'objet, qui se situe à la position $u$ à l'instant $t_k$, et les paramètres de mouvement de l'objet : vitesse angulaire $\tau$, axe de rotation $L$ et suite de translations de perturbation $T_1 \ldots T_m$.

Etant donné que la durée entre les instants $t_k$ et $t_{k+1}$ est courte, nous considérons que le mouvement est approximativement composé de la rotation stable et d'une translation, fraction linéaire (proportionnelle au temps) de la translation de perturbation entre les instants $t_k$ et $t_{k+1}$.

Ainsi, la position $\psi_{k,t}(u)$ est donnée par :

$$\psi_{k,t}(u) = R_{\bar{a},\tau t}(u - u_0) + u_0 + \frac{t}{t_{k+1} - t_k} T_{k+1}, \text{ pour } 0 \le t \le t_{k+1} - t_k,$$

avec $T_{m+1} = 0$.

On remarquera que $\psi_{k,0}(u) = u$ et $\psi_{k,t_{k+1}-t_k}(u)$ est la position du point de l'objet à l'instant $t_{k+1}$ en partant de la position $u$ à l'instant $t_k$.

L'étape 452 de détermination de la position continue de l'objet $O$ comprend en outre une étape 456 de détermination d'une relation entre la position $C_{k,t}(s)$ à l'instant initial $t_0$ du point $o$ de l'objet, dont la position à l'instant $t_k + t$ est sur le pixel $s$ du plan de coupe $P$, à partir de la fonction $\psi_{k,t}$ précédente. Cette position $C_{k,t}(s)$ est donnée par :

$$C_{k,t}(s) = R^t_{\bar{a},\tau(t_k - t_0 + t)}(\pi_3 s - u_0 - \frac{t}{t_{k+1} - t_k} T_{k+1} - R_{\bar{a},\tau t}\overline{T}_k) + u_0.$$

L'étape 400 de détermination de la représentation tridimensionnelle $V$ de l'objet $O$ comprend en outre une étape 460 de choix de l'opérateur $Op$ comme étant l'intégrale sur l'intervalle d'acquisition $I_k$ de la convolution de la fonction de représentation tridimensionnelle $V_\beta$ avec la fonction d'étalement du point $f_R$.

L'étape 400 de détermination de la représentation tridimensionnelle $V$ de l'objet $O$ comprend en outre une étape 462 de calcul, pour chaque point $u$ de l'ensemble $\Omega$, d'une estimation $\tilde{X}(u)$ de la valeur de ce point $u$, à partir de l'opérateur $Op$. L'estimation $\tilde{X}(u)$ est donnée par:

$$\tilde{X}(u) = \int_{t=\delta_0}^{\delta_0+\delta} V_\beta * f_{R_{\bar{a},\tau(t_k - t_0 + t)}}(C_{k,t}(s)) dt,$$

où $s$ et l'image en coupe $X_k$ (de l'instant de prise $t_k$) sont respectivement le pixel et l'image d'origine du point $u$,

Comme pour la seconde variante, l'étape 400 de détermination de la représentation tridimensionnelle $V$ de l'objet $O$ comprend en outre une étape 464 de choix de la fonction de représentation tridimensionnelle $V_\beta$ en tant que décomposition en fonctions radiales de base $\phi$:

$$\forall u \in D, V_\beta(u) = \sum_{w \in W} \phi(u - w)\beta(w),$$

avec $W$ l'ensemble des noeuds dans le volume $D$.

L'étape 400 de détermination de la représentation tridimensionnelle $V$ de l'objet $O$ comprend en outre une étape 466 de détermination des coefficients $\beta(w)$.

Plus précisément, en remplaçant $V_\beta$ par sa décomposition en fonctions radiales de base, on obtient, pour chaque point $u$ de l'ensemble $\Omega$ :

$$\tilde{X}(u) = \sum_{w \in W} \int_{t=\delta_0}^{\delta_0+\delta} \gamma(\pi_3 s + R_{\bar{a},\tau(t_k-t_0+t)}(u_0 - w) - \frac{t}{t_{k+1}-t_k}T_{k+1} - R_{\bar{a},\tau t}\overline{T}_k - u_0)dt \, \beta(w),$$

où $s$ et l'image en coupe $X_k$ (de l'instant de prise $t_k$) sont respectivement le pixel et l'image d'origine du point $u$, et $\gamma = \phi * f$.

Notons

$$\gamma_{k,w}(x) = \int_{t=\delta_0}^{\delta_0+\delta} \gamma(x + R_{\bar{a},\tau(t_k-t_0+t)}(u_0 - w) - \frac{t}{t_{k+1}-t_k}T_{k+1} - R_{\bar{a},\tau t}\overline{T}_k - u_0)dt \,.$$

On a donc, pour chaque point $u$ de l'ensemble $\Omega$:

$$\tilde{X}(u) = \sum_{w \in W} \gamma_{k,w}(\pi_3 s) \, \beta(w),$$

où $s$ et l'image en coupe $X_k$ (de l'instant de prise $t_k$) sont respectivement le pixel et l'image d'origine du point $u$.

Comme pour la seconde variante $\gamma = \phi * f$ est de préférence calculé analytiquement ou numériquement par calculs approchés.

Ainsi, l'étape 466 de détermination des coefficients $\beta(w)$ comprend une étape de calcul des $\gamma_{k,w}$.

Si le calcul analytique de $\gamma_{k,w}$ est lourd ou impossible, $\gamma_{k,w}$ est approché par une somme discrète, par exemple la somme de Riemann :

$$\gamma_{k,w}(x) \approx \frac{\delta}{J}\sum_{j=0}^{J-1} \gamma(x + R_{\bar{a},\tau(t_k-t_0+\delta_0+\delta\frac{j}{J})}(u_0 - w) - \frac{\delta_0 + \delta\frac{j}{J}}{t_{k+1}-t_k}T_{k+1} - R_{\bar{a},\tau(\delta_0+\delta\frac{j}{J})}\overline{T}_k - u_0),$$

avec $J$ un nombre entier assez grand, par exemple $J \approx 20$.

Plus généralement, dans le cas où l'on utilise plusieurs séquences $S_l$, $l = 1,...,I$, les rotations $Q_l$ et les translations $h_l$ étant connues, l'étape 466 de détermination des coefficients $\beta(w)$ comprend une étape consistant à sensiblement placer toutes les positions $O_l$ des représentations de l'objet $O$ dans une même position de référence. Rappelons qu'en choisissant par exemple la première séquence comme la séquence de référence, $Q_1 = I_3$ (avec $I_3$ la matrice identité 3-par-3) et $h_1 = 0$, on peut décomposer dans le repère de la séquence de référence, pour chaque point $u$ de l'ensemble $\Omega$, l'estimation $\tilde{X}(u)$ de la valeur de ce point $u$ en une combinaison linéaire associée aux coefficients $\beta(w)$ :

$$\tilde{X}(u) = \sum_{w \in W} \gamma_{k,w}^l(\pi_3 s) \, \beta(w),$$

avec

$$\gamma_{k,w}^l(x) = \int_{t=\delta_0}^{\delta_0+\delta} \gamma(R_{\bar{a}_l,\tau_l(t_k^l-t_0^l+t)}Q_l R_{\bar{a}_l,\tau_l(t_k^l-t_0^l+t)}^t(x - u_0^l - \frac{t}{t_{k+1}^l-t_k^l}T_{k+1}^l - R_{\bar{a}_l,\tau_l t}\overline{T}_k^l) + R_{\bar{a}_l,\tau_l(t_k^l-t_0^l+t)}(Q_l(u_0^l - h_l) - w))dt$$

où s, l'image en coupe $X_k^l$ (de l'instant de prise $t_k^l$) et $S_l$ sont respectivement le pixel, l'image et la séquence d'origine du point $u$, $\tau_l$, $\vec{a}_l$, $u_0^l$ et $T_k^l$ sont les paramètres du mouvement pour la séquence $S_l$, $T_{m_l+1}^l = 0$ et $\gamma = \phi * f$.

Ainsi, dans ce cas, l'étape 466 comprend une étape de calcul des $\gamma_{k,w}^{l}$.

Comme $\gamma_{k,w}(x)$, $\gamma_{k,w}^{l}(x)$ peut aussi être approché par une somme discrète (somme de Riemann par exemple).

De préférence, $D$ est choisi suffisamment grand tel que $D$ contient tous les points $u$ de position

$$
Q_l^t \, R_{\bar{a}_l, \tau_l(t_k^l - t_0^l)}^{t} \left( \pi_3 s - u_0^l - \overline{T}_k^l \right) + Q_l^t \left( u_0^l - h_l \right),
$$

pour chaque pixel $s$ de chaque image en coupe $X_k^l$ de chaque séquence $S_l$, avec $l = 1 \ldots l$. Les paramètres $\beta$ de la fonction de représentation tridimensionnelle $V_\beta$ sont déterminés en minimisant la fonction de coût quadratique suivante :

$$
E(\beta) = \sum_{l=1}^{l} \sum_{k=1}^{m_l} \sum_s \left( X_k^l(s) - \sum_{w \in W} \gamma_{k,w}^{l}(\pi_3 s) \beta(w) \right)^2 + \lambda \beta' A \beta,
$$

où $A$ est une matrice semi définie positive, $\beta^t A \beta$ mesure l'irrégularité des coefficients $\beta(w)$, par exemple $A$ est choisie de la même manière que précédemment, $\lambda > 0$ est le paramètre de compromis entre l'adéquation de la fonction de représentation tridimensionnelle et la régularité des coefficients. $E(\beta)$ s'écrit sous la forme matricielle suivante:

$$
E(\beta) = \| y - \mathrm{K}\beta \|^2 + \lambda \beta' A \beta,
$$

où $\beta$ est le vecteur des coefficients, les éléments du vecteur $y$ sont les $X_k^l(s)$ , et la matrice K est composée des éléments $\gamma_{k,w}^{l}(\pi_3 s)$.

Le résultat de minimisation de $E(\beta)$ est la solution du système linéaire suivant :

$$
(\mathrm{K}'\mathrm{K} + \lambda A)\beta = \mathrm{K}'y.
$$

Pour calculer les coefficients $\beta(w)$, on peut utiliser les méthodes d'optimisation numériques, par exemple la méthode de gradient conjugué, ou la méthode d'optimisation par bloc présentée précédemment.

**Réglage de la position du plan de coupe**

Il est souhaitable que la plus grande partie de l'objet $O$ passe dans le plan de coupe $P$. Dans une configuration optimale, l'axe de rotation $L$ est sensiblement contenu dans le plan de coupe $P$. Ainsi, dans un mode de réalisation de l'invention, le procédé comprend une étape 53, intercalée entre les étapes 52 et 54, de réglage de la position du plan de coupe $P$ par rapport à l'axe de rotation $L$. Bien évidemment, l'étape de réglage peut également être mise en oeuvre indépendamment des étapes 50, 52, 54 et 56.

Il est prévu trois façons de réaliser l'étape 53 de réglage, afin d'obtenir sensiblement la configuration optimale, ou bien, à défaut, une configuration convenable.

**Première variante de réglage**

Dans une première variante, l'étape 53 de réglage comprend le déplacement et l'inclinaison du microscope optique afin de placer l'axe de rotation $L$ dans le plan focal P . Cette variante permet d'obtenir la configuration optimale.

Cette variante comprend la détermination de l'axe de rotation $L$ de la même manière qu'aux étapes 54 et 56.

*Seconde variante de réglage*

Dans une seconde variante, l'étape 53 de réglage comprend la modification du champ électrique ou électromagnétique afin de placer l'axe de rotation *L* dans le plan focal *P.* Cette variante permet également d'obtenir la configuration optimale.

Cette variante comprend la détermination de l'axe de rotation *L* de la même manière qu'aux étapes 54 et 56.

*Troisième variante de réglage*

En référence à la figure 16, dans une troisième variante, l'étape 53 de réglage comprend le déplacement du plan focal *P* suivant la direction *Z* (la direction perpendiculaire au plan focal *P*) afin que le plan focal *P* coupe l'objet *O* sensiblement au milieu de l'objet. Le déplacement du plan focal *P* est obtenu en translatant le microscope optique 12, et/ou en agissant sur la lentille 14 pour changer la distance focale.

Dans l'exemple décrit, le milieu de l'objet *O* est pris comme étant le barycentre de l'objet *O*.

Ainsi, en référence à la figure 16, l'étape 53 de réglage comprend tout d'abord une étape 53A de prise d'une séquence d'images en coupe $X_0...X_m$, puis une étape 53B de détermination de la vitesse angulaire $\tau$, de l'axe de rotation *L* et de la suite de translations de perturbation $T_1...T_m$. L'étape 53B est mise en oeuvre de la même manière que l'étape 56.

L'étape 53 de réglage comprend en outre une étape 53C de détermination de l'ensemble de points $\Omega$ de la même manière qu'à l'étape 404.

L'étape 53 de réglage comprend en outre une étape 53D de détermination d'un barycentre *b* des points lumineux de l'ensemble $\Omega$. Le barycentre *b* est de préférence déterminé par la relation :

$$b = \frac{\sum_{i=0}^{n}\sum_{s}1_{X_i(s)>\alpha}C_k(s)}{\sum_{i=0}^{n}\sum_{s}1_{X_i(s)>\alpha}},$$

avec $X_0...X_n$, $n \leq m$, la partie des images en coupes $X_0...X_m$, qui ont été acquises pendant l'intervalle de temps au cours duquel l'objet réalise un nombre maximum de tours complets en tournant autour de l'axe de rotation, $1_{B>A}$ = 1 quand B est supérieur à A et 0 sinon, et $\alpha$ est par exemple le *q*-quantile de niveau de gris des images en coupe $X_0...X_n$ (ce qui signifie que la proportion des pixels qui ont un niveau de gris inférieur ou égal à $\alpha$ est sensiblement égale à *q*). Généralement, q vaut entre 60% et 95%.

L'étape 53 de réglage comprend en outre une étape 53E de calcul de la projection $\overline{b}$ du barycentre *b* sur l'axe de rotation *L*.

L'étape 53 de réglage comprend en outre une étape 53F de réglage du système d'imagerie 10 pour amener le plan de coupe *P* sur la projection $\overline{b}$ du barycentre *b*.

**Annexe:**

Soit $\phi$ est une fonction radiale de base. Pour toute matrice de rotation *R*, $\phi(Rx)=\phi(x)$. On a alors :

$$\begin{aligned}
\phi * f_R(x) &= \int\phi(x-u)f(Ru)du \\
&= \int\phi(x-R'y)f(y)dy \\
&= \int\phi(Rx-y)f(y)dy \\
&= \phi * f(Rx).
\end{aligned}$$

**Revendications**

1. Procédé de détermination d'une représentation tridimensionnelle ($V$) d'un objet ($O$) à partir d'une séquence d'images en coupe ($X_0...X_m$) de l'objet ($O$) dans un plan de coupe ($P$), chaque image en coupe ($X_0...X_n$) ayant été prise à un instant de prise de vue ($t_0...t_m$) respectif, du type comprenant:

   - pour chaque image en coupe ($X_k$), la détermination (200) de la position de l'objet ($O$) par rapport au plan de coupe ($P$) à l'instant ($t_k$) de prise de l'image en coupe ($X_k$),
   - la détermination (400) d'une représentation tridimensionnelle ($V$) de l'objet ($O$) à partir des images en coupe ($X_0...X_m$) et des positions de l'objet ($O$) par rapport au plan de coupe ($P$) à chaque instant de prise de vue ($t_0...t_m$), le procédé dans lequel les positions de l'objet ($O$) par rapport au plan de coupe ($P$) sont déterminées en utilisant les images en coupe ($X_0...X_m$),
   - le procédé étant **caractérisé en ce que**, l'objet ($O$) ayant un mouvement par rapport au plan de coupe ($P$) composé, d'une part, d'un mouvement régulier défini par des paramètres de mouvement régulier ($L$, $\tau$) et, d'autre part, d'une suite de déplacements de perturbations ($T_1...T_m$) de l'objet entre l'instant ($t_k$) de prise d'une image en coupe ($X_k$) et l'instant ($t_{k+1}$) de prise de la suivante ($X_{k+1}$), les déplacements de perturbations ($T_1...T_m$) étant des translations de perturbation, de direction et de valeur variables, la détermination (200) des positions de l'objet ($O$) par rapport au plan de coupe ($P$) comprend la détermination (300) de la suite de déplacements de perturbation ($T_1...T_m$) en utilisant les images en coupe ($X_0...X_m$), et **en ce que**, le mouvement régulier étant un mouvement de rotation défini par les paramètres de mouvement suivants: un axe de rotation fixe ($L$) et une vitesse angulaire ($\tau$) constante, la détermination (200) des positions de l'objet ($O$) par rapport au plan de coupe ($P$) comprend la détermination (210, 300) d'au moins une partie des paramètres de mouvement régulier ($L$, $\tau$) en utilisant les images en coupe ($X_0...X_m$).

2. Procédé selon la revendication 1, **caractérisé en outre en ce que** la détermination des positions de l'objet ($O$) par rapport au plan de coupe ($P$) comprend la détermination (210) de la vitesse angulaire en valeur absolue ($|\tau|$) à partir de la détermination (212) d'une période de révolution ($p$) telle que deux images en coupe ($X_k$, $X_k$) prises à des instants respectifs ($t_k$, $t_{k'}$) séparés l'un de l'autre d'un temps sensiblement égale à un multiple, non nul, de la période ($p$), soient sensiblement similaires.

3. Procédé selon la revendication 2, **caractérisé en outre en ce que** la détermination (212) de la période ($p$) comprend :

   - la détermination (214) d'un groupe initial de périodes candidates ($p_1...P_n$),
   - la sélection (240), parmi les périodes candidates ($p_1...p_n$), pour chaque image en coupe ($X_k$), d'un premier sous-ensemble ($p_{j(k,1)},..., p_{j(k,e)}$) regroupant les périodes candidates $p_1...p_n$ ayant les niveaux de similitude périodique les plus élevés, le niveau de similitude périodique ($sim(X_k,p_j)$) caractérisant, pour chaque période candidate ($p_j$), le niveau de similitude de l'image en coupe ($X_k$) avec des images en coupe sensiblement périodiques ($X_{k'}$), pour la période candidate ($p_j$),
   - la détermination (248) d'une loi de probabilité qu'une période candidate soit sélectionnée, la loi de probabilité ayant la période ($p$) comme paramètre,
   - la sélection de la période ($p$) parmi les périodes candidates ($p_1...p_n$) du groupe initial, comme étant celle maximisant la vraisemblance selon la loi de probabilité, connaissant les périodes candidates sélectionnées.

4. Procédé selon l'une quelconque des revendications 1 à 3, **caractérisé en outre en ce que** la détermination (200) des positions de l'objet ($O$) par rapport au plan de coupe ($P$) comprend, la vitesse angulaire en valeur absolue ($|\tau|$) étant connue :

   - pour chaque image en coupe ($X_k$), la détermination (304) d'image en coupe ($X_{k'}$) spatialement voisines de l'image en coupe ($X_k$),
   - pour chaque image en coupe ($X_k$), le calcul (308) d'une projection orthogonale ($F_{k,k'}(X_k)$) de l'image en coupe ($X_k$) sur un plan support de chaque image en coupe ($X_{k'}$) spatialement voisine, la projection orthogonale ($F_{k,k'}(X_k)$) étant exprimée en fonction d'une valeur d'axe de rotation et d'une valeur de suite de translations de perturbation,
   - la comparaison (310) de la valeur de chacun d'un ensemble de pixels de la projection orthogonale ($F_{k,k'}(Xk)$) avec la valeur de ce pixel de l'image en coupe spatialement voisine ($X_{k'}$) sur laquelle la projection a été réalisée,
   - la détermination (312) de l'axe de rotation ($L$) et de la suite de translations de perturbation ($T_1...T_m$) dont les valeurs donnent des valeurs de pixels proches au cours de la comparaison (310).

**5.** Procédé selon la revendication 4, **caractérisé en outre en ce que** la projection orthogonale ($F_{k,k'}(X_k)$) de l'image en coupe ($X_k$) est réalisée par le calcul d'une transformation affine ($Aff(Q_{k,k'}, v_{k,k'}, X_k)$) de l'image en coupe ($X_k$), la transformation affine ($Aff(Q_{k,k'}, v_{k,k'}, X_k)$) ayant une composante de transformation linéaire ($Q_{k,k'}(\vec{a}, \tau)$) et une composante de translation ($v_{k,k'}(L, \tau, T_1...T_m)$) fonctions de, respectivement, d'une part, la direction ($\vec{a}$) de la valeur d'axe de rotation et la vitesse de rotation ($\tau$) et, d'autre part, la valeur d'axe de rotation ($L$), la vitesse de rotation ($\tau$) et la valeur de suite de translations de perturbation ($T_1...T_m$).

**6.** Procédé selon l'une quelconque des revendications 1 à 3, **caractérisé en outre en ce que** la détermination (200) des positions de l'objet ($O$) par rapport au plan de coupe ($P$) comprend, la vitesse angulaire en valeur absolue ($|\tau|$) étant connue :

  - pour chaque image en coupe ($X_k$), la détermination (316) d'image en coupe ($X_{k'}$) spatialement voisines de l'image en coupe ($X_k$),
  - pour chaque image en coupe ($X_k$), le calcul (320) d'une projection orthogonale ($F_{k,k'}(X_k)$) de l'image en coupe ($X_k$) sur un plan support ($X_{k'}$) de chaque image en coupe ($X_{k'}$) spatialement voisine, la projection orthogonale ($F_{k,k'}(X_k)$) étant exprimée en fonction d'un valeur d'axe de rotation et d'une valeur de suite de translations de perturbation, la projection orthogonale ($F_{k,k'}(X_k)$) étant réalisée par le calcul d'une transformation affine ($Aff(Q_{k,k'}, v_{k,k'}, X_k)$) de l'image en coupe ($X_k$), la transformation affine ($Aff(Q_{k,k'}, v_{k,k'}, X_k)$) ayant une composante de transformation linéaire ($Q_{k,k'}(\vec{a}, \tau)$) et une composante de translation ($v_{k,k'}$), la composante de transformation linéaire ($Q_{k;k'}(\vec{a}, \tau)$) étant fonction la direction ($\vec{a}$) de la valeur d'axe de rotation et la vitesse de rotation ($\tau$),
  - la comparaison (322) de la valeur de chacun d'un ensemble de pixels de la projection orthogonale ($F_{k,k'}(X_k)$) avec la valeur de ce pixel de l'image en coupe spatialement voisine ($X_{k'}$) sur laquelle la projection a été réalisée,
  - la détermination (324) de la direction de l'axe de rotation ($L$) et des composantes de translation ($v_{k,k'}$), dites de référence, dont les valeurs donnent des valeurs de pixels proches au cours de la comparaison (322).

**7.** Procédé selon la revendication 6, **caractérisé en outre en ce que** la détermination d'une estimation de la position de l'objet ($O$) par rapport au plan de coupe ($P$) comprend, la direction ($\vec{a}$) de l'axe de rotation ($L$) et les composantes de translation de référence ($v_{k,k'}$) ayant été déterminées :

  - l'expression de composantes de translation ($v_{k,k'}(u_0, \vec{a}, \tau, T_1...T_m)$) de transformation affine en fonction d'une valeur de suite de translations de perturbation ($T_1...T_m$) et d'une valeur de point de passage ($u_0$) de l'axe de rotation ($L$),
  - la détermination de la suite de translations de perturbation ($T_1...T_m$) et d'un point de passage ($u_0$) de l'axe de rotation ($L$) dont les valeurs donnent des composantes de translation ($v_{k,k'}(u_0, \vec{a}, \tau, T_1...T_m)$) proches des composantes de translation de référence ($v_{k,k'}$).

**8.** Procédé selon l'une quelconque des revendications 1 à 3, **caractérisé en outre en ce que** la détermination des positions de l'objet ($O$) par rapport au plan de coupe ($P$) comprend la détermination de l'axe de rotation ($L$).

**9.** Procédé selon la revendication 8, **caractérisé en outre en ce que** la détermination de l'axe de rotation ($L$) comprend la détermination d'une projection ($L_{XY}$) de l'axe de rotation ($L$) sur le plan de coupe ($P$), à partir des images en coupe ($X_0...X_m$).

**10.** Procédé selon la revendication 8 ou 9, **caractérisé en outre en ce que**, chaque image en coupe ($X_k$) comprenant une grille de pixels, identique pour toutes les images en coupe ($X_0...X_m$), il comprend :

  - pour chaque pixel ($s$) de la grille, la détermination (338, 340) de l'histogramme des valeurs que prend ce pixel ($s$) dans au moins une partie de la séquence d'images en coupe ($X_0...X_m$) et de l'histogramme des valeurs que prend le point symétrique au pixel par rapport à une valeur de projection ($L_{XY}$) de l'axe de rotation ($L$),
  - la détermination (344) de la projection ($L_{XY}$) de l'axe de rotation ($L$) dont la valeur donne des histogrammes proches entre chaque pixel et son point symétrique.

**11.** Procédé selon l'une quelconque des revendications 8 à 10, **caractérisé en outre en ce qu'**il comprend :

  - la détermination (348), pour au moins un pixel ($s$) de la grille, d'un temps ($t(s)$) de symétrisation, nécessaire à un point de l'objet pour se déplacer depuis ce pixel ($s$) jusqu'au point symétrique ($L_{xy}(s)$) par rapport à la projection ($L_{xy}$) de l'axe de rotation ($L$),
  - la détermination (356) d'un angle entre l'axe de rotation ($L$) et sa projection ($L_{xy}$) sur le plan de coupe ($P$), à partir du ou des temps de symétrisation ($t(s)$).

**12.** Procédé selon l'une quelconque des revendications 8 à 11, **caractérisé en outre en ce que** la détermination (200) des positions de l'objet ($O$) par rapport au plan de coupe ($P$) comprend, la vitesse angulaire ($\tau$) et l'axe de rotation ($L$) étant connus :

- pour chaque image en coupe ($X_k$), la détermination d'image en coupe ($X_{k'}$) spatialement voisines de l'image en coupe ($X_k$),
- pour chaque image en coupe ($_{Xk}$), le calcul d'une projection orthogonale ($F_{k,k}(X_k)$) de l'image en coupe ($X_k$) sur un plan support ($X_{k'}$) de chaque image en coupe ($X_{k'}$) spatialement voisines, la projection orthogonale ($F_{k,k'}(X_k)$) étant exprimée en fonction d'un valeur d'axe de rotation et d'une valeur de suite de translations de perturbation, la projection orthogonale ($F_{k,k}(X_k)$) étant réalisée par le calcul d'une transformation affine ($Aff(Q_{k,k'},v_{k,k'},X_k)$) de l'image en coupe ($X_k$), la transformation affine ($Aff(Q_{k,k'},v_{k,k'},X_k)$) ayant une composante de transformation linéaire ($Q_{k,k},(\vec{a},\tau)$) et une composante de translation ($v_{k,k}$), la composante de transformation linéaire ($Q_{k,k}(\vec{a},\tau)$) étant fonction de la direction ($\vec{a}$) de la valeur d'axe de rotation et la vitesse angulaire de rotation ($\tau$),
- la comparaison de la valeur de chacun d'un ensemble de pixels de la projection orthogonale ($F_{k,k'}(X_k)$) avec la valeur de ce pixel de l'image en coupe spatialement voisine ($X_{k'}$) sur laquelle la projection a été réalisée,
- la détermination, l'axe de rotation ($L$) étant connu, des composantes de translation ($v_{k,k'}$)' dites de référence, dont les valeurs donnent des valeurs de pixels proches au cours de la comparaison (322),
- l'expression de composantes de translation ($v_{k,k},(u_0,\vec{a},\tau,T_1;...T_m)$) de transformation affine en fonction d'une valeur de suite de translations de perturbation ($T_1...T_m$) et d'une valeur de point de passage ($u_0$) de l'axe de rotation ($L$),
- la détermination de la suite de translations de perturbation ($T_1...T_m$) et d'un point de passage ($u_0$) de l'axe de rotation ($L$) dont les valeurs donnent des composantes de translation ($v_{k,k}(u_0,\vec{a},\tau,T_1...T_m)$) proches des composantes de translations de référence ($v_{k,k'}$).

**13.** Produit programme d'ordinateur, **caractérisé en ce qu'**il est conçu pour, lorsque mis en oeuvre sur un ordinateur informatique, mettre en oeuvre les étapes d'un procédé selon l'une quelconque des revendications 1 à 12.

**14.** Procédé d'analyse d'un objet ($O$) pour en déterminer une représentation tridimensionnelle ($V$), **caractérisé en ce qu'**il comprend :

- l'introduction (50) de l'objet ($O$) dans un système d'imagerie (10) définissant un plan focal formant un plan de coupe ($P$),
- la configuration (52) du système d'imagerie (10) pour faire tourner l'objet ($O$) autour d'un axe de rotation fixe ($L$) et avec une vitesse angulaire fixe ($\tau$),
- la prise d'une séquence d'images en coupe ($X_0....X_m$) de l'objet ($O$),
- la détermination d'une représentation tridimensionnelle ($V$) de l'objet ($_O$) à partir de la séquence d'images en coupe ($X_0...X_m$), en utilisant un procédé selon l'une quelconque des revendications 1 à 12.

**15.** Procédé selon la revendication 14, **caractérisé en outre en ce qu'**il comprend:

- la prise (53A) d'une séquence d'images en coupe de l'objet ($O$), dites images en coupe de réglage,
- la détermination (53B) de l'axe de rotation ($L$) de l'objet ($O$), à partir des images en coupe de réglage.

**16.** Procédé selon la revendication 15, **caractérisé en outre en ce qu'**il comprend le réglage (53) du système d'imagerie (10) pour déplacer (53F) le plan de coupe ($P$) par rapport à l'objet ($O$) de manière que le plan de coupe ($P$) passe par un milieu ($\bar{b}$) de l'objet ($O$).

**17.** Procédé selon la revendication 16, **caractérisé en outre en ce que** le réglage (53) du système d'imagerie (10) comprend la détermination (53D) d'un barycentre ($b$) de l'objet, et **en ce que** le milieu de l'objet ($O$) est la projection du barycentre ($\bar{b}$) sur l'axe de rotation ($L$).

**18.** Système d'imagerie **caractérisé en ce qu'**il comprend :

- des moyens (12) permettant d'obtenir des images dans un plan focal $P$,
- un réceptacle (18) pour recevoir un objet ($O$),
- des moyens (34, 30) pour mettre l'objet ($O$) en mouvement,

- des moyens (36) pour recevoir des images en coupe prises dans le plan focal, adaptés pour mettre en oeuvre un procédé selon l'une quelconque des revendications 1 à 12.

**Claims**

1. A method for determining a three-dimensional representation ($V$) of an object ($O$) using a sequence of cross-section images ($X_0...X_m$) of the object ($O$) in a cross-section plane ($P$), each cross-section image ($X_0...X_m$) having been taken at a respective moment ($t_0...t_m$) of image capture, of the type comprising:

   - for each cross-section image ($X_k$), determining (200) the position of the object ($O$) in relation to the cross-section plane ($P$) at the moment ($t_k$) the cross-section image ($X_k$) was captured,
   - determining (400) a three-dimensional representation ($V$) of the object ($O$) using cross-section images ($X_0...X_m$) and positions of the object ($O$) in relation to the cross-section plane ($P$) at each moment of image capture ($t_0...t_m$), the positions of the object ($O$) in relation to the cross-section plane ($P$) being determined using the cross-section images ($X_0...X_m$),

   the method being **characterized in that**, the object ($O$) having a movement in relation to the cross-section plane ($P$) made up, on one hand, of a regular movement defined by regular movement parameters ($L$, $\tau$) and, on the other hand, a sequence of displacements ($T_1...T_m$) disrupting the object between the moment ($t_k$) the cross-section image ($X_k$) is captured and the following moment ($t_{k+1}$) of image ($X_{k+1}$) capture, the disrupting displacements ($T_1...T_m$) being disrupting translations, of variable direction and value, the determination (200) of the positions of the object ($O$) in relation to the cross-section plane ($P$) comprises the determination (300) of the sequence of disrupting displacements ($T_1...T_m$) using the cross-section images ($X_0...X_m$), and **in that**, the regular movement being a rotational movement defined by the following movement parameters: a fixed axis of rotation ($L$) and a constant angular speed ($\tau$), determining (200) the positions of the object ($O$) in relation to the cross-section plane ($P$) comprises determining (210, 300) at least part of the regular movement parameters ($L$, $\tau$) using the cross-section images ($X_0...X_m$).

2. The method according to claim 1, also **characterized in that** determining the positions of the object ($O$) in relation to the cross-section plane ($P$) comprises determining (210) the absolute value of the angular speed ($|\tau|$) from the determination (212) of a period of revolution ($p$) such that two cross-section images ($X_k$, $X_{k'}$) taken at respective moments ($t_k$, $t_{k'}$) separated from each other by a time substantially equal to a non-zero multiple of the period ($p$), are substantially similar.

3. The method according to claim 2, also **characterized in that** determining (212) the period ($p$) comprises:

   - determining (214) an initial group of candidate periods ($p_1...p_n$),
   - selecting (240), among the candidate periods ($p_1...p_n$), for each cross-section image ($X_k$), a first subset ($p_{j(k,1)},..., p_{j(k,e)}$) grouping together candidate periods $p_1...p_n$ having the highest levels of periodic similarity, the periodic similarity level ($sim(X_k,p_i)$) characterizing, for each candidate period ($p_j$), the similarity level of the cross-section image ($X_k$) with substantially periodic cross-section images ($X_{k'}$), for the candidate period ($P_j$),
   - determining (248) a law of probability that a candidate period will be selected, the law of probability having the period ($p$) as a parameter,
   - selecting the period ($p$) from the candidate periods ($p_1...p_n$) of the initial group, as being that which maximizes the likelihood, according to the law of probability, knowing the selected candidate periods.

4. The method according to any one of claims 1 to 3, also **characterized in that** determining (200) positions of the object ($O$) in relation to the cross-section plane ($P$) comprises, the absolute value of the angular speed ($|\tau|$) being known:

   - for each cross-section image ($X_k$), determining (304) cross-section images ($X_{k'}$) spatially neighboring on the cross-section image ($X_k$),
   - for each cross-section image ($X_k$), calculating (308) an orthogonal projection ($F_{k,k'}(X_k)$) of the cross-section image ($X_k$) on a support plane of each spatially neighboring cross-section image ($X_{k'}$), the orthogonal projection ($F_{k,k'}(X_k)$) being expressed as a function of an axis of rotation value and a disrupting translation sequence value,
   - comparing (310) the value of each of a set of pixels of the orthogonal projection ($F_{k,k'}(X_k)$) with the value of said pixel of the spatially neighboring cross-section image ($X_{k'}$) on which the projection was done,

- determining 312) the axis of rotation ($L$) and sequence of disrupting translations ($T_1...T_m$) whereof the values yield the values of close pixels during the comparison (310).

5. The method according to claim 4, also **characterized in that** the orthogonal projection ($F_{k,k'}(X_k)$) of the cross-section image ($X_k$) is done by calculating an affine transformation ($Aff(Q_{k,k'}, v_{k,k'}, X_k)$) of the cross-section image ($X_k$), the affine transformation ($Aff(Q_{k,k'}, v_{k,k'}, X_k)$) having a linear transformation component ($Q_{k,k'}(\vec{a}, \tau)$) and a translation component ($v_{k,k'}(L, \tau, T_1...T_m)$) depending on, respectively, the direction ($\vec{a}$) of the axis of rotation value and the rotational speed ($\tau$) on one hand, and, on the other hand, the axis of rotation value ($L$), the rotational speed ($\tau$) and the disrupting translation sequence value ($T_1...T_m$).

6. The method according to any one of claims 1 to 3, also **characterized in that** determining (200) positions of the object ($O$) in relation to the cross-section plane ($P$) comprises, the absolute value of the angular speed ($|\tau|$) being known:

   - for each cross-section image ($X_k$), determining (316) cross-section images ($X_{k'}$) spatially neighboring on the cross-section image ($X_k$),
   - for each cross-section image ($X_k$), calculating (320) an orthogonal projection ($F_{k,k'}(X_k)$) of the cross-section image ($X_k$) on a support plane ($X_{k'}$) of each spatially neighboring cross-section image ($X_{k'}$), the orthogonal projection ($F_{k,k'}(X_k)$) being expressed as a function of an axis of rotation value and a disrupting translation sequence value, the orthogonal projection ($F_{k,k'}(X_k)$) being done by calculating an affine transformation ($Aff(Q_{k,k'}, v_{k,k'}, X_x)$) of the cross-section image ($X_k$), the affine transformation ($Aff(Q_{k,k'}, v_{k,k'}, X_k)$) having a linear transformation component ($Q_{k,k'}(\vec{a}, \tau)$) and a translation component ($v_{k,k'}$), the linear transformation component ($Q_{k,k'}(\vec{a}, \tau)$) depending on the direction of the axis ($\vec{a}$) of rotation value and the speed of rotation ($\tau$),
   - comparing (322) the value of each of a set of pixels of the orthogonal projection ($F_{k,k'}(X_k)$) with the value of that pixel of the spatially neighboring cross-section image ($X_{k'}$) on which the projection was done,
   - determining (324) the direction of the axis of rotation ($L$) and the so-called reference translation components ($v_{k,k'}$), whereof the values yield close pixel values during the comparison (322).

7. The method according to claim 6, also **characterized in that** determining an estimate of the position of the object ($O$) in relation to the cross-section plane ($P$) comprises, the direction ($\vec{a}$) of the axis of rotation ($L$) and the reference translation components ($v_{x,k'}$) having been determined:

   - the expression of affine transformation translation components ($v_{k,k'}(u_0, \vec{a}, \tau, T_1...T_m)$) as a function of a disrupting translation sequence value ($T_1...T_m$), and a passage point value ($u_0$) of the axis of rotation ($L$),
   - determining the sequence of disrupting translations ($T_1...T_m$) and a passage point ($u_0$) of the axis of rotation ($L$) whereof the values yield translation components ($v_{k,k'}(u_0, a, \tau, T_1...T_m)$) close to reference translation components ($v_{k,k'}$).

8. The method according to any one of claims 1 to 3, also **characterized in that** determining positions of the object ($O$) in relation to the cross-section plane ($P$) comprises determining the axis of rotation ($L$).

9. The method according to claim 8, also **characterized in that** determining the axis of rotation ($L$) comprises determining a projection ($L_{xy}$) of the axis of rotation ($L$) on the cross-section plane ($P$), using cross-section images ($X_0...X_m$).

10. The method according to claim 8 or 9, also **characterized in that** each cross-section image ($X_k$) comprising a grid of pixels, identical for all of the cross-section images ($X_0...X_m$), the method comprises:

    - for each pixel ($s$) of the grid, determining (338, 340) the histogram of the values said pixel ($s$) assumes in at least part of the sequence of cross-section images ($X_0...X_m$) and the histogram of the values assumed by the point symmetrical to the pixel in relation to a projection value ($L_{XY}$) of the axis of rotation ($L$),
    - determining (344) the projection ($L_{XY}$) of the axis of rotation ($L$) whereof the value yields close histograms between each pixel and its point of symmetry.

11. The method according to anyone of claims 8 to 10, also **characterized in that** it comprises:

    - determining (348), for at least one pixel ($s$) of the grid, a symmetrization time ($t(s)$), necessary for a point of the object to move from said pixel ($s$) to the point of symmetry ($L_{XY}(s)$) in relation to the projection ($L_{XY}$) of the axis of rotation ($L$),

- determining (356) an angle between the axis of rotation ($L$) and its projection ($L_{XY}$) on the cross-section plane ($P$), using the symmetrization time(s) ($t(s)$).

12. The method according to any one of claims 8 to 11, also **characterized in that** determining (200) positions of the object ($O$) in relation to the cross-section plane ($P$) comprises, the angular speed ($\tau$) and axis of rotation ($L$) being known:

- for each cross-section image ($X_k$), determining cross-section images ($X_{k'}$) spatially neighboring on the cross-section image ($X_k$),
- for each cross-section image ($X_k$), calculating an orthogonal projection ($F_{k,k'}(X_k)$) of the cross-section image ($X_k$) on a support plane ($X_{k'}$) of each spatially neighboring cross-section image ($X_{k'}$), the orthogonal projection ($F_{k,k'}(X_k)$ being expressed as a function of an axis of rotation value and a disrupting translation sequence value, the orthogonal projection ($F_{k,k'}(X_k)$) being done by calculating an affine transformation ($Aff(Q_{k,k'}, v_{k,x'}, X_k)$) of the cross-section image ($X_k$), the affine transformation ($Aff(Q_{k,k'}, v_{k,k'}, X_k)$) having a linear transformation component ($Q_{k',k}(\vec{a}, \tau)$) and a translation component ($v_{k,k'}$), the linear transformation component ($Q_{k,k}(\vec{a}, \tau)$) depending on the direction ($\vec{a}$) of the axis of rotation value and the angular speed of rotation ($\tau$),
- comparing the value of each of a set of pixels of the orthogonal projection ($F_{k,k'}(X_k)$ with the value of said pixel of the spatially neighboring cross-section image ($X_{k'}$) on which the projection was done,
- determining, the axis of rotation ($L$) being known, so-called reference translation components ($v_{k,k'}$), the values of which yield close pixel values during the comparison (322),
- expressing affine transformation translation components ($v_{k,k}(u_0, \vec{a}, \tau, T_1...T_m)$)) as a function of a disrupting translation sequence value ($T_1...T_m$) and a passage point value ($u_0$) of the axis of rotation ($L$),
- determining the sequence of disrupting translations ($T_1...T_m$) and a passage point ($u_0$) of the axis of rotation ($L$) whereof the values yield translation components ($v_{k,K}(u_0, \vec{a}, \tau, T_1....T_m)$)) close to the reference translation components ($v_{k,k'}$).

13. A computer program product, **characterized in that** it is designed, when implemented on a computer, to carry out the steps of a method according to any one of claims 1 to 12.

14. A method for analyzing an object ($O$) to determine a three-dimensional representation ($V$) thereof, **characterized in that** it comprises:

- introducing (50) the object ($O$) into an imaging system (10) defining a focal plane forming a cross-section plane ($P$),
- configuring (52) the imaging system (10) to rotate the object ($O$) around a fixed axis of rotation ($L$) and with a fixed angular speed ($\tau$),
- capturing a sequence of cross-section images ($X_0...X_m$) of the object ($O$),
- determining a three-dimensional representation ($V$) of the object ($O$) from the sequence of cross-section images ($X_0...X_m$), using a method according to any one of claims 1 to 12.

15. The method according to claim 14, also **characterized in that** it comprises:

- capturing (53A) a sequence of cross-section images of the object ($O$), called adjustment cross-section images,
- determining (53B) the axis of rotation ($L$) of the object ($O$), using the adjustment cross-section images.

16. The method according to claim 15, also **characterized in that** it comprises adjusting (53) the imaging system (10) to move (53F) the cross-section plane ($P$) in relation to the object ($O$) such that the cross-section plane ($P$) passes through a middle ($\bar{b}$) of the object ($O$).

17. The method according to claim 16, also **characterized in that** the adjustment (53) of the imaging system (10) comprises determining (53D) a barycenter ($b$) of the object, and the middle of the object ($O$) is the projection of the barycenter ($b$) on the axis of rotation ($L$).

18. An imaging system **characterized in that** it comprises:

- means (12) making it possible to obtain images in a focal plane $P$,
- a receptacle (18) for receiving an object ($O$),
- means (34, 30) for setting the object ($O$) in motion,

- means (36) for receiving cross-section images taken in the focal plane, adapted to implement a method according to any one of claims 1 to 12.

**Patentansprüche**

1. Verfahren zum Bestimmen einer dreidimensionalen Darstellung (V) eines Objekts (O) anhand einer Folge von Schnittbildern ($X_0$ ... $X_m$) des Objekts (O) in einer Schnittebene (P), wobei jedes Schnittbild ($X_0$ ... $X_m$) zu einem jeweiligen Bildaufnahmezeitpunkt ($t_0$ ... $t_0$) aufgenommen worden ist, des Typs, der umfasst:

   - für jedes Schnittbild ($X_k$) Bestimmen (200) der Position des Objekts (O) in Bezug auf die Schnittebene (P) zu dem Zeitpunkt ($t_k$) des Aufnehmens des Schnittbildes ($X_k$),
   - Bestimmen (400) einer dreidimensionalen Darstellung (V) des Objekts (O) anhand der Schnittbilder ($X_0$ ... $X_m$) und der Positionen des Objekts (O) in Bezug auf die Schnittebene (P) zu jedem Bildaufnahmezeitpunkt ($t_0$ ... $t_m$), wobei in dem Verfahren die Positionen des Objekts (O) in Bezug auf die Schnittebene (P) unter Verwendung der Schnittbilder ($X_0$ ... $X_m$) bestimmt werden,
   - wobei das Verfahren **dadurch gekennzeichnet ist, dass** dann, wenn das Objekt (O) eine Bewegung in Bezug auf die Schnittebene (P) besitzt, die zusammengesetzt ist einerseits aus einer regelmäßigen Bewegung, die durch Parameter (L, $\tau$) einer regelmäßigen Bewegung definiert ist, und andererseits aus einer Folge von Störungsverlagerungen ($T_1$ ... $T_m$) des Objekts zwischen dem Zeitpunkt ($t_k$) des Aufnehmens eines Schnittbildes ($X_k$) und dem Zeitpunkt ($t_{k+1}$) des Aufnehmens des folgenden Schnittbildes ($X_{k+1}$), und die Störungsverlagerungen ($T_1$ ... $T_m$) Störungstranslationen mit variabler Richtung und variablem Wert sind, das Bestimmen (200) der Positionen des Objekts (O) in Bezug auf die Schnittebene (P) das Bestimmen (300) der Folge von Störungsverlagerungen ($T_1$ ... $T_m$) unter Verwendung der Schnittbilder ($X_0$ ... $X_m$) umfasst, und dass dann, wenn die regelmäßige Bewegung eine Drehbewegung ist, die durch die folgenden Bewegungsparameter definiert ist: eine feste Drehachse (L) und eine konstante Winkelgeschwindigkeit ($\tau$), das Bestimmen (200) der Positionen des Objekts (O) in Bezug auf die Schnittebene (P) das Bestimmen (210, 300) wenigstens eines Teils der Parameter (L, $\tau$) der regelmäßigen Bewegung unter Verwendung der Schnittbilder ($X_0$ ... $X_m$) umfasst.

2. Verfahren nach Anspruch 1, außerdem **dadurch gekennzeichnet, dass** das Bestimmen der Position des Objekts (O) in Bezug auf die Schnittebene (P) das Bestimmen (210) des Absolutwerts der Winkelgeschwindigkeit ($|\tau|$) anhand des Bestimmens (212) einer Umlaufperiode (p) umfasst, derart, dass zwei Schnittbilder ($X_k$, $X_{k'}$), die zu Zeitpunkten ($t_k$, $t_{k'}$) aufgenommen wurden, die voneinander um eine Zeit getrennt sind, die im Wesentlichen gleich einem von null verschiedenen Vielfachen der Periode (p) ist, im Wesentlichen gleich sind.

3. Verfahren nach Anspruch 2, außerdem **dadurch gekennzeichnet, dass** das Bestimmen (212) der Periode (p) umfasst:

   - Bestimmen (214) einer anfänglichen Gruppe ($p_1$ ... $p_n$) von Kandidatenperioden,
   - Auswählen (240) unter den Kandidatenperioden ($p_1$ ... $p_n$) für jedes Schnittbild ($X_k$) einer ersten Untergesamtheit ($p_{j(k,1)}$ ..., $p_{j(k,e)}$), in der die Kandidatenperioden ($p_1$... $p_n$), die die höchsten periodischen Ähnlichkeitsgrade haben, umgruppiert sind, wobei der periodische Ähnlichkeitsgrad (sim($X_k$, $P_j$)) für jede Kandidatenperiode ($p_j$) den Ähnlichkeitsgrad des Schnittbildes ($X_k$) mit im Wesentlichen periodischen Schnittbildern ($X_{k'}$) für die Kandidatenperiode ($p_j$) charakterisiert,
   - Bestimmen (248) eines Gesetzes für die Wahrscheinlichkeit, dass eine Kandidatenperiode gewählt wird, wobei das Wahrscheinlichkeitsgesetz die Periode (p) als Parameter hat,
   - Auswählen der Periode (p) unter den Kandidatenperioden ($p_1$ ... $p_n$) der anfänglichen Gruppe als jene, die die Wahrscheinlichkeit gemäß dem Wahrscheinlichkeitsgesetz bei Kenntnis der gewählten Kandidatenperiode maximal macht.

4. Verfahren nach einem der Ansprüche 1 bis 3, außerdem **dadurch gekennzeichnet, dass** das Bestimmen (200) der Positionen des Objekts (O) in Bezug auf die Schnittebene (P) dann, wenn der Absolutwert der Winkelgeschwindigkeit ($|\tau|$) bekannt ist, umfasst:

   - für jedes Schnittbild ($X_k$) Bestimmen (304) des Schnittbildes ($X_{k'}$), das zu dem Schnittbild ($X_k$) räumlich benachbart ist,
   - für jedes Schnittbild ($X_k$) Berechnen (308) einer orthogonalen Projektion ($F_{k,k'}(X_k)$) des Schnittbildes ($X_k$) auf eine Trägerebene jedes räumlich benachbarten Bildes ($X_{k'}$), wobei die orthogonale Projektion ($F_{k,k'}(X_k)$) als

Funktion eines Drehachsenwertes und eines Folgenwertes der Störungstranslationen ausgedrückt wird,
- Vergleichen (310) des Wertes jeder Gesamtheit von Pixeln der orthogonalen Projektion ($F_{k,k'}(X_k)$) mit dem Wert dieses Pixels des räumlich benachbarten Schnittbildes ($X_{k'}$), auf dem die Projektion verwirklicht worden ist,
- Bestimmen (312) der Drehachse (L) und der Folge von Störungstranslationen ($T_1 ... T_m$), deren Werte die Werte naher Pixel während des Vergleichs (310) angeben.

5. Verfahren nach Anspruch 4, außerdem **dadurch gekennzeichnet, dass** die orthogonale Projektion ($F_{k',k'}(X_k)$) des Schnittbildes ($X_k$) durch Berechnen einer affinen Transformation ($Aff(Q_{k,k'}, v_{k,k'}, X_k)$) des Schnittbildes ($X_k$) verwirklicht wird, wobei die affne Transformation ($Aff(Q_{k,k'}, v_{k,k'}, X_k)$) eine Komponente ($Q_{k,k'}(\vec{a}, \tau)$) einer linearen Transformation und eine Translationskomponente ($v_{k,k'}(L, \tau, T_1 ... T_m)$) hat, die Funktionen einerseits der Richtung ($\vec{a}$) des Drehachsenwertes und der Drehgeschwindigkeit ($\tau$) und andererseits des Drehachsenwertes (L), der Drehgeschwindigkeit ($\tau$) und des Wertes der Folge von Störungstranslationen ($T_1 ... T_m$) sind.

6. Verfahren nach einem der Ansprüche 1 bis 3, außerdem **dadurch gekennzeichnet, dass** das Bestimmen (200) der Positionen des Objekts (O)in Bezug auf die Schnittebene (P) dann, wenn der Absolutwert der Winkelgeschwindigkeit ($|\tau|$) bekannt ist, umfasst:

- für jedes Schnittbild ($X_k$) Bestimmen (316) eines Schnittbildes ($X_{k'}$), das zu dem Schnittbild ($X_k$) räumlich benachbart ist,
- für jedes Schnittbild ($X_k$) Berechnen (320) einer orthogonalen Projektion ($F_{k,k'}(X_k)$) des Schnittbildes ($X_k$) auf eine Trägerebene ($X_{k'}$) jedes räumlich benachbarten Schnittbildes ($X_{k'}$), wobei die orthogonale Projektion ($F_{k,k'}(X_k)$) als Funktion eines Drehachsenwertes und eines Folgenwertes von Störungstranslationen ausgedrückt wird, wobei die orthogonale Projektion ($F_{k',k'}(X_k)$) durch Berechnen einer affinen Transformation ($Aff(Q_{k,k'}, v_{k,k'}, X_k)$) des Schnittbildes ($X_k$) verwirklicht wird, wobei die affine Transformation ($Aff(Q_{k,k'}, v_{k,k'}, X_k)$) eine Komponente ($Q_{k,k'}(\vec{a}, \tau)$) einer linearen Transformation und eine Translationskomponente ($v_{k'}$) hat, wobei die Komponente ($Q_{k,k}(\vec{a}, \tau)$) der linearen Transformation eine Funktion der Richtung ($\vec{a}$) des Drehachsenwertes und der Drehgeschwindigkeit ($\tau$) ist,
- Vergleichen (322) des Wertes jedes Pixels der Gesamtheit von Pixeln der orthogonalen Projektion ($F_{k',k'}(X_k)$) mit dem Wert dieses Pixels des räumlich benachbarten Schnittbildes ($X_{k'}$), auf dem die Projektion verwirklicht wird,
- Bestimmen (324) der Richtung der Drehachse (L) und der Translationskomponenten ($v_{k,k'}$), die Referenzkomponenten genannt werden, deren Werte die Werte naher Pixel während des Vergleichs (322) angeben.

7. Verfahren nach Anspruch 6, außerdem **dadurch gekennzeichnet, dass** das Bestimmen einer Schätzung der Position des Objekts (O) in Bezug auf die Schnittebene (P) dann, wenn die Richtung ($\underline{a}$) der Drehachse (L) und der Referenz-Translationskomponenten ($v_{k,k'}$) bestimmt worden sind, umfasst:

- Ausdrücken der Translationskomponenten ($v_{k,k'}(u_0, \vec{a}, \tau, T_1 ... T_m)$) der affinen Transformation als Funktion eines Folgenwertes von Störungstranslationen ($T_1 ... T_m$) und eines Übergangspunktwertes ($u_0$) der Drehachse (L),
- Bestimmen der Folge von Störungstranslationen ($T_1 ... T_m$) und eines Übergangspunkts ($u_0$) der Drehachse (L), deren Werte die Translationskomponenten ($v_{k,k'}(u_0, a, \tau, T_1 ... T_m)$) ergeben, die sich in der Nähe der Referenz-Translationskomponenten ($v_{k,k'}$) befinden.

8. Verfahren nach einem der Ansprüche 1 bis 3, außerdem **dadurch gekennzeichnet, dass** das Bestimmen der Positionen des Objekts (O) in Bezug auf die Schnittebene (P) das Bestimmen der Drehachse (L) umfasst.

9. Verfahren nach Anspruch 8, außerdem **dadurch gekennzeichnet, dass** das Bestimmen der Drehachse (L) das Bestimmen einer Projektion ($L_{XY}$) der Drehachse (L) auf die Schnittebene (P) ausgehend von den Schnittbildern ($X_0 ... X_m$) umfasst.

10. Verfahren nach Anspruch 8 oder 9, außerdem **dadurch gekennzeichnet, dass** es dann, wenn jedes Schnittbild ($X_k$) ein Gitter von Pixeln enthält, das für alle Schnittbilder ($X_0 ... X_m$) gleich ist, Folgendes umfasst:

- für jedes Pixel (s) des Gitters Bestimmen (338, 340) des Histogramms der Werte, die dieses Pixel (s) wenigstens in einem Teil der Folge von Schnittbildern ($X_0 ... X_m$) annimmt, und des Histogramms der Werte, die der symmetrische Punkt zu dem Pixel in Bezug auf einen Projektionswert ($L_{XY}$) der Drehachse (L) annimmt,
- Bestimmen (344) der Projektion ($L_{XY}$) der Drehachse (L), deren Wert die nächsten Histogramme zwischen

37

jedem Pixel und seinem Symmetriepunkt angibt.

**11.** Verfahren nach einem der Ansprüche 8 bis 10, **dadurch gekennzeichnet, dass** es umfasst:

- Bestimmen (348) für wenigstens ein Pixel (s) des Gitters einer Symmetrisierungszeit (t(s)), die an einem Punkt des Objekts notwendig ist, um sich von diesem Pixel (s) bis zu dem Symmetriepunkt ($L_{XY}(s)$) in Bezug auf die Projektion ($L_{YX}$) der Drehachse (L) zu verlagern,
- Bestimmen (356) eines Winkels zwischen der Drehachse (L) und ihrer Projektion ($L_{XY}$) auf die Schnittebene (P) anhand der einen oder der mehreren Symmetrisierungszeiten (t(s)).

**12.** Verfahren nach einem der Ansprüche 8 bis 11, außerdem **dadurch gekennzeichnet, dass** das Bestimmen (200) der Positionen des Objekts (O) in Bezug auf die Schnittebene (P) dann, wenn die Winkelgeschwindigkeit ($\tau$) und die Drehachse (L) bekannt sind, Folgendes umfasst:

- für jedes Schnittbild ($X_k$) Bestimmen des Schnittbildes ($X_{k'}$), das zu dem Schnittbild ($X_k$) räumlich benachbart ist,
- für jedes Schnittbild ($X_k$) Berechnen einer orthogonalen Projektion ($F_{k'k'}(X_k)$) des Schnittbildes ($X_k$) auf eine Trägerebene ($X_{k'}$) jedes räumlich benachbarten Schnittbildes ($X_{k'}$), wobei die orthogonale Projektion ($F_{k,k'}(X_k)$) als Funktion eines Drehachsenwertes und eines Folgenwertes von Störungstranslationen ausgedrückt wird, wobei die orthogonale Projektion ($F_{k,k'}(X_k)$) durch Berechnen einer affinen Transformation ($Aff(Q_{k,k'}, v_{k,k'}, X_k)$) eines Schnittbildes ($X_k$) verwirklicht wird, wobei die affine Transformation ($Aff(Q_{k,k'}, v_{k,k'}, X_k)$) eine Komponente ($Q_{k,k'}(\vec{a}, \tau)$) einer linearen Transformation und eine Translationskomponente ($v_{k,k'}$) besitzt, wobei die Komponente ($Q_{k,k'}(\vec{a}, \tau)$) der linearen Transformation eine Funktion der Richtung ($\vec{a}$) des Drehachsenwertes und der Drehwinkelgeschwindigkeit ($\tau$) ist,
- Vergleichen des Wertes jedes Pixels der Gesamtheit von Pixeln der orthogonalen Transformation ($F_{k,k'}(X_k)$) mit dem Wert dieses Pixels des räumlich benachbarten Schnittbildes ($X_{k'}$), auf dem die Projektion verwirklicht worden ist,
- dann, wenn die Drehachse (L) bekannt ist, Bestimmen der Translationskomponenten ($v_{k,k'}$), die Referenz-Translationskomponenten genannt werden, deren Werte die Werte der nahen Pixel während des Vergleichs (322) ergeben,
- Ausdrücken der Translationskomponenten ($v_{k,k'}(u_0, \vec{a}\ \tau, T_1 ... T_m)$) der affinen Transformation als Funktion eines Folgenwertes von Störungstranslationen ($T_1 ... T_m$) und eines Übergangspunktwertes ($u_0$) der Drehachse (L),
- Bestimmen der Folge von Störungstranslationen ($T_1 ... T_m$) und eines Übergangspunkts ($u_0$) der Drehachse (L), deren Werte die Translationskomponenten ($v_{k,k'}(u_0, \vec{a}, \tau, T_1 ... T_m)$), die sich am nächsten bei den Referenz-Translationskomponenten ($v_{k,k'}$) befinden, ergeben.

**13.** Computerprogrammprodukt, **dadurch gekennzeichnet, dass** es dafür entworfen ist, dann, wenn es auf einem Datenverarbeitungsrechner ausgeführt wird, die Schritte eines Verfahrens nach einem der Ansprüche 1 bis 12 auszuführen.

**14.** Verfahren zum Analysieren eines Objekts (O), um daraus eine dreidimensionale Darstellung (V) zu bestimmen, **dadurch gekennzeichnet, dass** es umfasst:

- Einführen (50) des Objekts (O) in ein Abbildungssystem (10), das eine Brennebene definiert, die eine Schnittebene (P) bildet,
- Konfigurieren (52) des Abbildungssystems (10), um das Objekt (O) um eine feste Drehachse (L) und mit einer festen Winkelgeschwindigkeit ($\tau$) zu drehen,
- Aufnehmen einer Folge von Schnittbildern ($X_0 ... X_m$) des Objekts (O),
- Bestimmen einer dreidimensionalen Darstellung (V) des Objekts (O)anhand der Folge von Schnittbildern ($X_0 ... X_m$) unter Verwendung eines Verfahrens nach einem der Ansprüche 1 bis 12.

**15.** Verfahren nach Anspruch 14, außerdem **dadurch gekennzeichnet, dass** es umfasst:

- Aufnehmen (53A) einer Folge von Schnittbildern des Objekts (O), die Regulierungsschnittbilder genannt werden,
- Bestimmen (53B) der Drehachse (L) des Objekts (O) anhand der Regulierungsschnittbilder.

**16.** Verfahren nach Anspruch 15, außerdem **dadurch gekennzeichnet, dass** es das Regulieren (53) des Abbildungssystems (10) umfasst, um die Schnittebene (P) in Bezug auf das Objekt (O) in der Weise zu verlagern, dass die Schnittebene (P) durch eine Mitte (b̄) des Objekts (O) verläuft.

**17.** Verfahren nach Anspruch 16, außerdem **dadurch gekennzeichnet, dass** das Regulieren (53) des Abbildungssystems (10) das Bestimmen (53D) eines Schwerpunkts (b) des Objekts umfasst und dass die Mitte des Objekts (O) die Projektion des Schwerpunkts (b) auf die Drehachse (L) ist.

**18.** Abbildungssystem, **dadurch gekennzeichnet, dass** es umfasst:

- Mittel (12), die ermöglichen, Bilder in einer Brennebene (P) zu erhalten,
- einen Aufnahmebehälter (18) zum Aufnehmen eines Objekts (O),
- Mittel (34, 30), um das Objekt (O) in Bewegung zu versetzen,
- Mittel (36), um Schnittbilder, die in der Brennebene aufgenommen wurden, zu empfangen, die dafür ausgelegt sind, ein Verfahren nach einem der Ansprüche 1 bis 12 auszuführen.

**FIG.1**

**FIG.2**

**FIG.3**

## FIG.4

300

304

306

308

310

312

## FIG.5

300

314

316

318

320

322

324

326

328

330    332

## FIG.7

FIG.6

300

## FIG.8

**FIG.9**

**FIG.10**

**FIG.11**

**FIG.12**

420

422

404

424

426

428

430

432

434

440

442

444

FIG.13

428

436

437

438

FIG.14

450

↓

400

452

454

↓

456

↓

460

↓

462

↓

464

↓

466

**FIG.15**

53

53A

↓

53B

↓

53C

↓

53D

↓

53E

↓

53F

**FIG.16**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1413911 A1

**Littérature non-brevet citée dans la description**

- **YU Y. et al.** A Bayesian 3D volume reconstruction for confocal micro-rotation cell imaging. *Medical image computing and computer-assisted intervention - MIC-CAI,* 2007